Europäisches Patentamt

European Patent Office

Office européen des brevets

(19)

(11) **EP 0 429 310 B1**

(12) **EUROPEAN PATENT SPECIFICATION**

(45) Date of publication and mention
of the grant of the patent:
**23.09.1998 Bulletin 1998/39**

(51) Int Cl.⁶: **H02M 3/335**

(21) Application number: **90312748.8**

(22) Date of filing: **22.11.1990**

(54) **Zero-current switching forward power conversion**

Nullstromkommutierungs-Durchfluss-Leistungswandlung

Conversion directe de puissance à commutation par courant nul

(84) Designated Contracting States:
**DE FR GB IT**

(30) Priority: **22.11.1989 US 440882**

(43) Date of publication of application:
**29.05.1991 Bulletin 1991/22**

(73) Proprietor: **VLT CORPORATION**
**San Antonio, Texas 78230 (US)**

(72) Inventors:
• **Vinciarelli, Patrizio**
**Boston, Massachusetts 02110 (US)**

• **Prager, Jay M.**
**Tyngsboro, Massachusetts 01879 (US)**

(74) Representative: **Deans, Michael John Percy et al**
**Lloyd Wise, Tregear & Co.,**
**Commonwealth House,**
**1-19 New Oxford Street**
**London WC1A 1LW (GB)**

(56) References cited:
**EP-A- 0 344 067**    **WO-A-82/03302**
**DE-A- 3 543 299**    **FR-A- 2 608 857**

**Description**

This invention relates to zero-current switching, forward power conversion.

One such power converter scheme (e.g., the one described in Vinciarelli, U. S. Patent No. 4,415,959,) transfers energy from a voltage source for delivery to a load using a transformer that has a controlled amount of effective secondary leakage inductance (e.g. a leakage reactance transformer). On the source side of the transformer, a switch is connected in series with the source and the primary winding of the transformer. The switch connects the source to and disconnects it from the primary winding in a succession of energy transfer cycles. On the load side of the transformer, a first unidirectional conducting device and a capacitor are connected in series with the secondary winding. The capacitor and the effective leakage inductance define a characteristic time scale for the cycling of the switch such that the switch is cycled on and off at times when the current in the switch and the first unidirectional conducting device are essentially zero. The first unidirectional conducting device constrains current flow in the effective leakage inductance to be directed only in the direction of the load, thereby preventing bidirectional energy flow (resonance) from occurring between the effective leakage inductance and the capacitor. Energy is transferred to the load via a second inductor whose value is large in comparison with the effective leakage inductance. This second inductor effectively appears as a current sinking load across the capacitor. A second unidirectional conducting device connected in parallel with the capacitor constrains the capacitor voltage to be unipolar and prevents bidirectional energy transfer from occurring between the second inductor and the capacitor. In the topology so described, the parameters of the circuit elements and the requirement of zero-current switching constrain the converter to unidirectionally transfer a fixed amount of energy during every energy transfer cycle. Because the output power is the product of that fixed amount of energy multiplied by the frequency of occurrence of the energy transfer cycles, control of the output power requires varying the frequency of energy transfer cycles.

By effectively eliminating switching losses and simultaneously constraining energy transfer to occur only In the forward direction, the prior art topology allows implementation of converters which achieve power densities and efficiencies unachievable with either "non-zero-current switching" topologies or contemporary "resonant" topologies.

EP-A-344067, which is to be treated as "part of the state of the art" for this invention only by virtue of Article 54(3) and (4) EPC, describes a zero-current switching forward converter circuit including a transformer having a primary and a secondary winding with an effective secondary leakage inductance. A switch couples a power source across the primary winding of the transformer. A unidirectional conducting device is connected in series with the secondary winding and conducts when the switch conducts. A capacitor is connected in series with the secondary winding and the unidirectional conducting device. A controller closes and opens the switch to transfer power from a voltage source via the effective leakage inductance of the transformer to charge the capacitor during an energy transfer cycle. A second switch is connected on the secondary side of the transformer. The controller also controls opening and closing of the second switch.

As will be explained below, among other things, the present invention provides zero-current switching converters in which the amount of energy transferred during a given energy transfer cycle may be selectively governed.

In a first aspect thereof, the invention provides a method of zero-current switching forward conversion in a circuit comprising: a power transformer including a primary and a secondary winding, said power transformer being constructed to have an effective secondary leakage inductance L2e; a first switching device connected for selectively coupling a power source across the primary winding of said power transformer; a first unidirectional conducting device connected in series with said secondary winding and oriented to conduct during conduction by said first switching device; a capacitor of capacitance C connected in series with said secondary winding and said first unidirectional conducting device; and a second switching device connected on the secondary side of said transformer; said method comprising the steps of closing said first switching device at times of zero-current and opening said first switching device substantially at a first instant in time subsequent to closure of said switching device at which current returns to zero to transfer power from said voltage source via the effective leakage inductance of said transformer to charge said capacitance during an energy transfer cycle having a characteristic time scale of $\pi \sqrt{L2e{*}C}$, and opening and closing said second switching device to selectively govern the amount of energy transferred during said energy transfer cycle.

In a second and alternative such aspect, the invention provides a zero-current switching forward converter circuit comprising: a power transformer including a primary and a secondary winding, said power transformer being constructed to have an effective secondary leakage inductance L2e; a first switching device connected for selectively coupling a power source across the primary winding of said power transformer; a first unidirectional conducting device connected in series with said secondary winding and oriented to conduct during conduction by said first switching device; a capacitor of capacitance C connected in series with said secondary winding and said first unidirectional conducting device; a controller having control means configured operatively to close said first switching device at times of zero-current and to open said first switching device substantially at the first instant in time subsequent to closure of said switching device at which current returns to zero to operatively transfer power from said voltage source via the effective leakage inductance of said transformer to charge said capacitance during an energy transfer cycle having a characteristic time

scale of $\pi \sqrt{L2e*C}$; and a second switching device connected on the secondary side of said transformer; said controller further including a second control means adapted for opening and closing said second switching device to selectively govern the amount of energy transferred during said energy transfer cycle.

The invention provides, in a third alternative aspect thereof, a zero-current switching forward converter circuit comprising: a voltage source; a load; a power transformer including a primary and a secondary winding, said power transformer being constructed to have an effective secondary leakage inductance L2e; a first switching device connected to selectively couple said power source across the primary winding of said power transformer; a first unidirectional conducting device connected in series with said secondary winding and oriented to conduct during conduction by said first switching device; a capacitor of capacitance C connected in series with said secondary winding and said first unidirectional conducting device; a controller having control means configured operatively to close said first switching device at times of zero-current and to open said first switching device substantially at the first instant in time subsequent to closure of said switching device at which current returns to zero to operatively transfer power from said voltage source via the effective leakage inductance of said transformer to charge said capacitance during an energy transfer cycle having a characteristic time scale of $\pi \sqrt{L2e*C}$; a second switching device connected on the secondary side of said transformer and in parallel with said capacitor to prevent charging of said capacitor when said second switching device is closed; and an inductor connected in series between said capacitor and the load to deliver current to the load; said controller further including a second control means adapted for opening and closing said second switching device to selectively govern the amount of energy transferred during said energy transfer cycle.

In arrangements in which an inductor is operatively connected in series between the capacitor and the load to deliver current to the load the circuit may be operated in a reverse boost mode, the method of operation comprising the steps of causing said closing and opening of said first switching device, and closing said second switching device when the voltage across said capacitor is substantially zero to prevent reverse current in said inductor from transferring energy to said capacitor.

Preferred embodiments include the following features. The second switching device may be connected in parallel with the capacitor to prevent charging of the capacitor when the second switching device is closed. The second control means includes means for detecting closure of the first switching device, means for opening the second switching device at substantially the same time that the first switching device is closed, means for detecting voltage across the capacitor, and means for closing the second switching device when voltage across the capacitor is substantially zero.

In some embodiments, the converter circuit delivers power to two or more independent loads and for that purpose includes a primary inductor connected in series with the capacitor and one of the independent loads, and a plurality of secondary windings magnetically coupled to the primary inductor, the secondary windings respectively having relative numbers of turns that correspond to the relative voltages to be delivered respectively to the independent loads.

In some embodiments the secondary winding is connected to one of the independent loads via a subcircuit that includes a secondary unidirectional conducting device oriented to conduct current when the voltage across the primary inductor is positive in a direction between the load and the capacitor. Each subcircuit includes a filter element for smoothing the voltage across the independent load. The filter element may include a capacitor in parallel with the load.

Alternatively, each subcircuit comprises a post-regulator for regulating the voltage delivered to the independent load. The secondary windings may be loosely coupled to the primary inductor. The post-regulator may comprise a reset magnetic amplifier or a dissipative regulator.

In other embodiments the second switching device may consist of a switch capable of unidirectional conduction when closed connected in a parallel with a second unidirectional conduction device, the switch and second unidirectional conducting device being oriented to conduct in opposite directions. This second switching device would be oriented so that said second unidirectional conducting device will prevent charging of said capacitor when current flowing in said second inductor is in a direction towards the load.

Alternatively, the second switching device may be connected in parallel with the secondary winding of the power transformer. A second unidirectional conducting device may be connected in parallel with the capacitor, oriented to prevent charging of the capacitor when current flowing in the second inductor is in a direction towards the load. An inductor is connected between the capacitor and the load.

In some embodiments, the second control means may include means for detecting closure of the first switching device, and means for opening the second switching device at a selected time thereafter.

In general, in another aspect, the invention features operating some embodiments of the converter circuit in a reverse boost mode by closing the second switching device when the voltage across the capacitor is substantially zero to prevent reverse current in the inductor from transferring energy to the capacitor.

In preferred embodiments, the second switching device is opened at substantially the same time that the first switching device is closed. The frequency at which the first switch is opened and closed is varied to effect output voltage regulation.

In general, in another aspect, the converter circuit is operated in a forward boost mode by holding the second switching device closed for a selected period of time after the first switching device has been closed.

In preferred embodiments, the second switching device is closed when voltage across the capacitor is substantially zero. The frequency at which the first switch is opened and closed is varied to effect output voltage regulation when the ratio of the value of the voltage source to the value of the output voltage of the converter is greater than the ratio of the number of turns on the primary of the power transformer to the number of turns on the secondary of the power transformer. The time period during which the second switching device remains closed is controlled so as to maintain the output voltage of the converter circuit in regulation irrespective of the relative values of the voltage source and the output voltage.

In general, in another aspect, the invention features controlling the converter circuit (in which the ratio of the number of turns on the primary of the power transformer to the number of turns on the secondary of the power transformer is greater than the ratio of the maximum value of the voltage source to the value of the output voltage of the converter) to operate in a forward boost mode, in which the second switching device is held closed for a selected period of time after the first switching device has been closed. In preferred embodiments, the second switching device is closed when voltage across the capacitor is substantially zero. The opening and closing of the first switching device occurs at constant frequency. The time period during which the second switching device remains closed is controlled so as to maintain the output voltage of the converter circuit in regulation.

Preferred embodiments include the following features. In some embodiments, the voltage source has a possibly varying voltage level, and the second switching device is opened when the level of current flowing in the first unidirectional conduction device rises to become equal to the level of current flowing in the direction of the load in the second inductor so long as the voltage level does not fall below a predetermined value, and is otherwise controlled to stay closed for a longer time period to maintain the output voltage of the converter circuit in regulation. In some embodiments, the opening and closing of the first switching device is permitted to occur at frequencies within a predetermined frequency band.

Among the advantages we can achieve, the forward boost mode provides a mechanism for selectively increasing the amount of energy transferred per converter operating cycle, irrespective of the relative values of converter input and output voltage. In addition to providing a mechanism for eliminating the "dropout voltage" characteristic of the prior art converter, forward boost allows implementing converters which maintain the output voltage in regulation as output power is varied, yet which operate either at a constant, relatively high, frequency or within a narrow band of relatively high frequencies.

The reverse boost mode eliminates the cause of the "discontinuous mode" in the prior art converter. If the second switching device is opened at essentially the same time that the first switching device is closed, forward energy transfer per cycle will be reduced as power output is reduced and output voltage may be regulated while operating the converter within a relatively narrow range of relatively high frequencies. Reverse boost also allows another embodiment where multiple auxiliary windings on the second inductor may be used to generate a multitude of regulated outputs, each one of which would remain in regulation as loads on the various outputs are independently varied. The voltages generated by the auxiliary windings will be related to the main output voltage by the ratio of the number of turns on any particular auxiliary winding to the number of turns on the main winding. Because current is permitted to reverse in the second inductor, energy transferred to the various auxiliary loads is not limited to the magnetic energy stored in the second inductor at the time that the auxiliary unidirectional conducting devices start conduction but may also be sourced from energy storage elements which form part of the main output load (i.e. filter capacitors).

Since opening and closing of the second switching device in both forward and reverse boost modes takes place at times when the voltage across it is essentially zero, and since the presence of the capacitor across the second switching device prevents instantaneous changes in voltage from occurring across it during its switching transitions, switching losses in the second switching device are avoided and forward and reverse boost are consistent with the essentially lossless character of the underlying zero-current switching conversion process.

Embodiments of enhanced zero-current switching topology described in more detail below more closely approach an "ideal" power conversion topology by providing:

A means for maintaining output voltage regulation, while power output is varied, while operating either at a constant, relatively high, frequency, or within a narrow band of relatively high frequencies;

A means for controlling the effects of current reversal in the second inductor, thereby eliminating the "discontinuous mode", and allowing reduction in the value of the second inductor to a value consistent with other desirable performance goals;

A means for easily generating a multitude of regulated outputs, each one of which would remain in regulation as loads on the various outputs are independently varied;

A means for reducing the value of input voltage required to maintain output voltage regulation while power output is varied;

A means for further improving power density by increasing power output without increasing maximum operating frequency, while simultaneously allowing reduction both in the inductance value and the physical size of the second inductor;

The benefits achieved with the underlying zero-current switching forward converter.

Other advantages and features will become apparent from the following description of preferred embodiments. We first briefly describe the drawings.

FIG. 1A is a schematic of a prior-art zero-current switching forward converter; FIG. 1B is an equivalent circuit.

FIG. 2A is a schematic of a preferred embodiment of a zero-current switching forward converter in accordance with the present invention; FIG. 2B is an equivalent circuit.

FIG. 3 shows current and voltage waveforms useful in describing the Forward Boost mode of operation of the converter circuit schematically shown in FIG. 2.

FIG. 4 shows a portion of an alternate embodiment of the zero-current switching converter of FIG. 2.

FIG. 5 is a schematic of another embodiment of the zero-current switching converter of FIG. 2.

FIG. 6 shows current and voltage waveforms useful in describing the Reverse Boost mode of operation of the converter circuit schematically shown in FIG. 2.

FIG. 7 shows the effect of different negative values of output current at the initiation of an energy transfer cycle on the waveforms of converter forward current during the Reverse Boost mode of operation.

FIG. 8 shows the effect of different negative values of output current at the initiation of an energy transfer cycle on forward charge transferred by the converter during the Reverse Boost mode of operation.

FIG. 9 is a schematic of an alternate embodiment of a portion of the converter circuit of FIG. 2 showing a method for generating a multitude of regulated voltage outputs, all of which can be maintained in regulation as the loads on the various outputs vary independently.

FIG. 10 is a schematic of an alternate embodiment of a portion of the converter circuit of FIG. 2 showing a method for generating a multitude of regulated voltage outputs all of which can be maintained in regulation as the loads on the various outputs vary independently, and which is more universally applicable than the embodiment of FIG. 9.

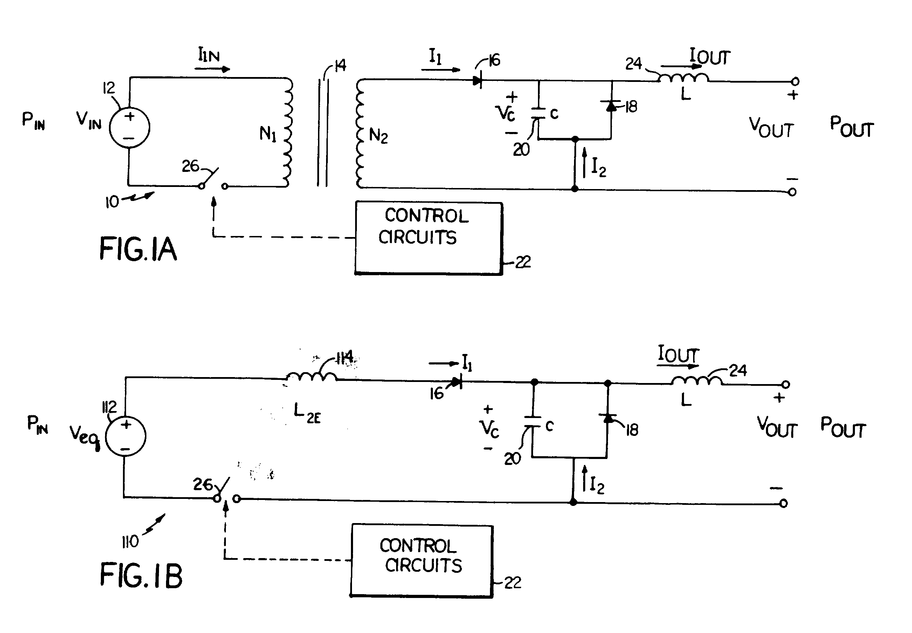

Figure 1A is a schematic of an embodiment of a zero-current switching power converter of the kind described in U. S. Patent No. 4,415,959 (referred to hereafter as the "prior art converter"). Figure 1B is a schematic of the prior art converter where the input source 12, leakage reactance transformer 14, and the first switch 26, are replaced by a model consisting of an effective inductance 114, of value L2e, representing the effective secondary leakage inductance of leakage reactance transformer 14, a transformed input source 112 whose voltage value, Veq, is the value of input source 12, Vin, multiplied by the secondary-to-primary turns ratio of transformer 14, and a first switch 26.

In the prior art converter 110 of Fig. 1B, power is transferred from a transformed input source 112 of voltage Veq to a load (not shown) whose voltage is regulated to be at a value Vout. Conservation of power requires that:

$$Pin = Pout + Heat\ Losses,$$

$$so,\ Pin \geq Pout$$

$$i.e.\ Veq*I1 \geq Vout*Iout \qquad (1)$$

where I1 and Iout are the average currents flowing in first unidirectional conducting device 16 and the second inductor 24, respectively. Iout is the sum, or mixture, of the two currents I1 and I2:

$$Iout = I1 + I2 \qquad (2)$$

The presence of the second unidirectional conducting device 18 constrains the average value of I2 to positive values which flow in the direction of conduction of the second unidirectional conducting device 18. Since both I1 and I2 are constrained to be positive, then Equation 2 requires:

$$Iout/I1 \geq 1 \qquad (3)$$

Since, from Equation 1:

$$Veq \geq Vout*Iout/I1$$

then,

$$Veq \geq Vout.$$

Said another way, by constraining the average current I2 to a range of positive values only, the behavior of the second unidirectional conducting device 18 limits the prior art converter to operating only in a "buck" mode (i.e. for Veq > Vout).

From an energy transfer viewpoint, the behavior of the second unidirectional conducting device 18 in the prior art converter is also responsible for the dependence of output power on operating frequency. Upon initiation of a cycle, closure of the first switching device 26 impresses the transformed input source voltage Veq across the effective inductance 114, whose initial instantaneous current, I1, is zero. A positive ramp of current I1 will flow in the effective inductance 114 until the current in the second unidirectional conducting device 18 (i.e. the difference between the instantaneous current in the effective inductance 114 and the instantaneous current in the second inductor 24, Iout), becomes zero, at which time the second unidirectional conducting device 18 ceases conducting. Once the second unidirectional conducting device 18 ceases conducting, energy transfer from the transformed input source via the effective inductance 114 to the capacitor 20 and load commences. Using procedures known to one skilled in the art, it can be shown that during this energy transfer cycle the voltage across the capacitor 20 will be:

$$v_c(t) = L_p \cdot \left[\frac{V_{eq}}{L_{2e}} + \frac{V_{out}}{L}\right] \cdot \left[1 - \cos\left[2 \cdot \frac{\pi}{T_1} \cdot t\right]\right] + \frac{2 \cdot \pi \cdot L_p}{T_1} \left[I_p - I_o\right] \cdot \sin\left[2 \cdot \frac{\pi}{T_1} \cdot t\right] \quad (4)$$

and the current in the effective inductance 114 is:

$$I_1(t) = I_p + \left[I_o - I_p\right] \cdot \frac{L}{L_s} \cdot \left[1 - \cos\left[2 \cdot \frac{\pi}{T_1} \cdot t\right]\right]$$

$$+ \frac{L \cdot T_1}{2 \cdot \pi \cdot L_s} \left[\frac{V_{eq}}{L_{2e}} + \frac{V_{out}}{L}\right] \cdot \sin\left[2 \cdot \frac{\pi}{T_1} t\right] + \frac{V_{eq} - V_{out}}{L_s} \cdot t \quad (4a)$$

where:

Ip is the instantaneous value of the current, I1, which is flowing in the effective inductance 114, of value L2e, in a positive direction towards the capacitor 20, at the instant that the second unidirectional conducting device 18 ceases conduction;

Io is the instantaneous value of the current, Iout, which is flowing in the second inductor 24, of value L, in a positive direction towards the load, at the instant that the second unidirectional conducting device 18 ceases conduction;

Ls is the sum of the inductance values of the effective inductance 114 and the second inductor 24
i.e.

$$Ls = L2e + L ;$$

Lp is the "paralleled" value of the inductance values of the effective inductance 114 and the second inductor 24
i.e.

$$Lp = L2e*L/(L2e + L) ;$$

and T1 is the period of the effective LC circuit which results from the combination of the capacitor 20 and the "paralleled" value of inductance, Lp :

$$T1 = 2\,\pi\,\sqrt{Lp*C}$$

The half period, T1/2, defines a characteristic time scale for the rise and fall of currents during the energy transfer cycle:

$$T1/2 = \pi\,\sqrt{Lp*C}.$$

For the prior art converter, the second unidirectional conducting device 18 ceases conducting when the values of I1 and Iout are equal. Thus, the values of Ip and Io are also equal, and Equations 4 and 4a reduce to:

$$v_c(t) = L_p \cdot \left[\frac{V_{eq}}{L_{2e}} + \frac{V_{out}}{L}\right] \cdot \left[1 - \cos\left[2 \cdot \frac{\pi}{T_1} \cdot t\right]\right] \tag{5}$$

$$I_1(t) = I_o + \frac{L \cdot T_1}{2 \cdot \pi \cdot L_s} \cdot \left[\frac{V_{eq}}{L_{2e}} + \frac{V_{out}}{L}\right] \cdot \sin\left[2 \cdot \frac{\pi}{T_1} t\right] + \frac{V_{eq} - V_{out}}{L_s} \cdot t \tag{5a}$$

For the prior art converter, controlled periodic forward energy flow depends upon the presence of a current sinking load across the capacitor 20. This demands that the value of the second inductor 24, L, be very large in comparison with the value of the effective inductance 114, L2e. Using the approximation that the ratio of L to L2e approaches infinity, Equations 5 and 5a may be further reduced to:

$$v_c(t) = V_{eq} \cdot \left[1 - \cos\left[2 \cdot \frac{\pi}{T_o} \cdot t\right]\right] \tag{6}$$

$$I_{1(t)} = I_o + V_{eq} \cdot \frac{T_o}{2 \cdot \pi \cdot L_{2e}} \cdot \sin\left[2 \cdot \frac{\pi}{T_o} \cdot t\right] \tag{6a}$$

where the characteristic time scale $T_o/2 = \pi\,\sqrt{L2e*C}$.

Both Equations 5 and 6 indicate that the peak voltage on the capacitor is dependent only on the value of the transformed input source voltage Veq, and is independent of Io. Since energy transfer per cycle, E, is first order dependent on the peak energy transferred to the capacitor during a cycle:

$$E = \frac{1}{2} \cdot C \cdot V^2 \tag{7}$$

varying output power requires varying the operating frequency of the converter.

Another characteristic of the prior art converter is that it incorporates no mechanism for controlling the effects of reverse energy transfer from the load to the capacitor 20. The second unidirectional conducting device 18 prevents energy stored in the second inductor 24 from being transferred to the capacitor during the last phase of the converter operating cycle when the capacitor voltage is zero and positive current Iout flows in the second inductor 24. Stated another way, the second unidirectional conducting device 18 prevents energy transfer to the capacitor 20 so long as the second inductor 24 is transferring energy to the load. However, below some value of load, current reversal in the second inductor cannot be prevented. Once the voltage across the capacitor 20 reaches zero at the end of the energy transfer cycle, the reverse voltage across the second inductor 24 will be equal to the load voltage, and the current in the second inductor 24 will decay at a fixed rate, independent of load:

$$dIout/dt = - Vout/L. \qquad (8)$$

Since operating frequency drops as Pout drops, for any finite value of L there will be some value of Pout (i.e. Iout) below which reverse current flow in the second inductor 24 cannot be prevented. Once this occurs, energy flowing back from the load (i.e. from energy storing elements at the load, such as filter capacitors) into capacitor 20 will asynchronously interfere with periodic forward energy transfer and exhibit itself as increased converter output noise. While relatively larger values of second inductance will limit the onset of this "discontinuous mode" to lower values of load, other considerations mitigate against too large a value (i.e. power density, efficiency, and closed-loop bandwidth).

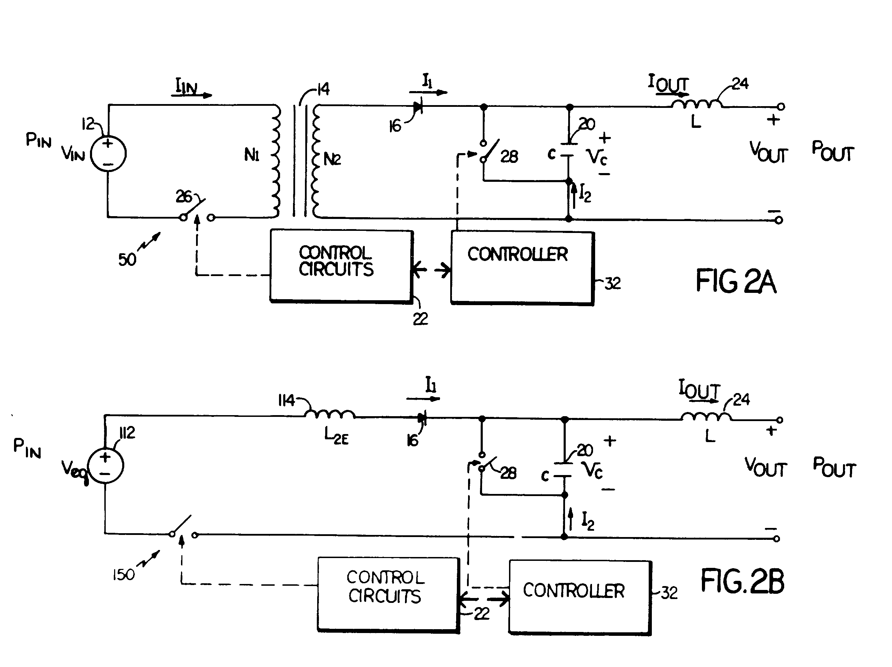

Referring to Figure 2A, a preferred embodiment of a zero-current switching power converter 50 according to the present invention is modified from the prior art converter 10 so that:

Vout may be regulated even when Vin decreases to a value less than Vout (i.e. to a level at which the average value of I2 would have to go negative to support Vout);

the amount of forward energy, E, transferred during each cycle, may be varied, thereby allowing Pout to be controlled without changing the operating frequency of the converter;

both reverse energy transfer from the load to the capacitor, and forward energy transfer from the source to the capacitor may be simultaneously controlled, thereby eliminating the "discontinuous" mode of operation and allowing a mode of operation whereby the output voltage may be regulated as Pout varies while the converter operates over a relatively narrow range of high frequencies.

In converter 50, second switch 28, capable of bidirectional conduction, replaces the second unidirectional conducting device 18 of Figure 1A. As in the prior art converter, a voltage source 12 is coupled to the primary winding of a leakage reactance transformer 14 via a first switch 26. First switch 26 is cycled on and off by a control circuit 22. Second switch 28 is cycled on and off by controller 32. Control circuit 22 and controller 32 may be parts of a single controller. A first unidirectional conducting device 16 and a capacitor 20 are connected in series with the secondary winding of leakage reactance transformer 14. The second switch 28 is connected across the capacitor 20. A second inductor 24 is connected in series between the capacitor 20 and the load.

Figure 2B shows the model of the converter 150 where the salient characteristics and effects of the leakage reactance transformer have been incorporated into a first effective leakage inductance 114 and a transformed input source of value Veq = Vin*(N2/N1), where N2 and N1 are the number of turns on the secondary and primary windings of the leakage reactance transformer 14, respectively.

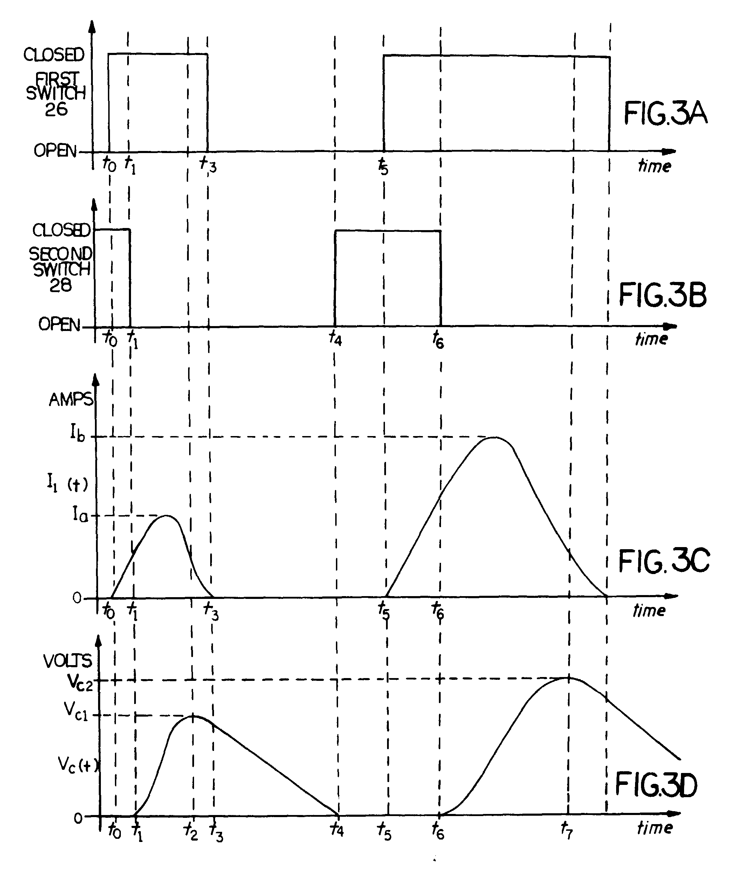

Figures 3A - 3D show the waveforms of the converter 150 operating in a mode referred to as Forward Boost mode. At time t0, with second switch 28 already closed, and with a positive current Iout flowing in the second inductor 24 in the direction of the load, and a positive current of equal value flowing in a positive direction in the second switching device 28, the first switch 26 is closed by control circuit 22, initiating a converter operating cycle. Upon closing the first switch 26, the transformed input source 112 causes a positive, linearly increasing, current, I1, to start flowing in the effective inductance 114. Because the second switch is closed, current I1 flows through the first unidirectional conducting device 16 and second switch 28, and returns to the transformed input source, thus storing energy in the effective inductance 114. In the prior art converter 10, 110, this first phase of the converter cycle would end when the instantaneous value of current I1 became equal to the instantaneous value of current Iout, at which point the second unidirectional conducting device 18 (Figure 1B) would cease conducting, and energy transfer to the capacitor 20 and load would commence. However, if, in Figure 2B, the controller 32 holds the second switch 28 closed long enough to allow the instantaneous value of current I1 to increase beyond the instantaneous value of Iout (i.e. if, in Equation 4a, the value, Ip, of current I1 at time t1 is greater than the instantaneous value of current Iout at time t2), then more energy will be stored in the effective inductance 114 in the converter of Figure 2B than would be stored in the effective inductance 114 of the prior art converter, if all other circuit elements are equal in value. By varying the amount of time that the second switch 28 remains closed after the first switch 26 closes, the amount of energy stored in the effective inductance in a converter according to the present invention can be varied within a continuous range of values. Said another way, by providing for negative flow of current I2, the second switch 28, of Figure 2, provides a mechanism for increasing the average current I1 to values which are greater than the average value of the current Iout. In accordance with Equations 1 and 2, this allows maintaining output voltage in regulation, as power is varied, for values of transformed input source 112, Veq, which are less than the regulated output voltage, Vout. Thus, Forward Boost provides a mechanism for overcoming the "dropout voltage" limitation of the prior art converter.

Referring again to Figs. 3A to 3D, at time t1, second switch 28 is opened by controller 32 and the energy transfer phase of the converter operating cycle begins. Equation 4 will again describe the behavior of the capacitor voltage during this phase, using values for Ip and Io which correspond to the instantaneous values of I1 and Iout when the second switch opens. In contrast to the prior art converter, where the equality of I1 and Iout at the initiation of energy transfer caused the peak capacitor voltage to depend only upon Veq (Equations 5 and 6), the peak voltage on the capacitor (Vc1, at time t2 in Fig. 3D) in the converter of Figure 2B will also depend on the difference in the currents I1 and Iout at the time that the second switch 28 is opened. Thus, for otherwise equal values of circuit elements, the converter of Figure 2B can "boost" its forward energy transfer to values greater than that which can be transferred by the prior art converter of Figure 1B, and can furthermore regulate the degree of Forward Boost within a continuous range of energy values by regulating the time period t0 to t1. The boosted peak value, Vc1, of capacitor voltage, Vc, and the boosted peak value of Ia, of the current I1, in Figs. 3C and 3D, will therefore be greater than the corresponding peak values which would be found in a prior art converter, all other circuit elements being equal.

Referring again to Figures 3A - 3D, the forward energy transfer phase is followed by a period during which energy stored in the capacitor 20 is, via the medium of the second inductor 24, delivered to the load. At time t3, the current I1 returns to zero and the first switch 26 is turned off. From time t3 to time t4, the capacitor 20 voltage decays to zero as its stored energy is delivered to the load by the positive current Iout. At time t4, when the capacitor 20 voltage returns to zero, second switch 28 is closed, preventing positive current flow in the second inductor 24 from reverse charging the capacitor 20.

Another operating cycle is also shown in Figures 3A - 3D, starting at time t5. In this cycle, however, the period t5 to t6, during which both the first switch 26 and the second switch 28 are closed, is longer than the equivalent period, t0 to t1, of the first cycle. The effect of the increased amount of Forward Boost is evidenced by the relatively larger value, Ib, of current, I1, flowing in the effective inductance 114 at time the second switch 28 is opened, and the correspondingly greater peak value, Vc2, of capacitor 20 voltage, Vc, at time t7.

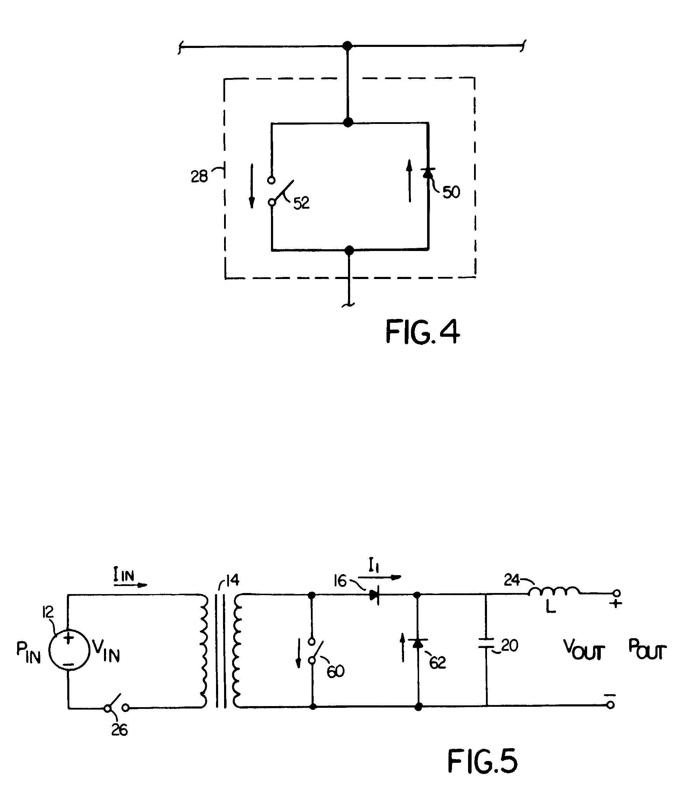

As a practical matter, typical commercially available single switching devices cannot efficiently perform the function of the bidirectional second switch 28, in Figure 2, at the high operating frequencies at which the converter will operate. An alternate embodiment of the present invention implements the second switch 28, of Figure 2, with the circuit arrangement of Figure 4. The circuit is comprised of a second unidirectional conducting device 50 connected across a unidirectional switch 52, such that the preferred directions of conduction of the two devices are in opposition (as indicated by the arrows adjacent to the two devices). The unidirectional switch 52 might be a bipolar or a MOSFET transistor. Utilizing this circuit allows the benefits of Forward Boost to be obtained without compromise. During the initial phases of an operating cycle, when the unidirectional switch 52 is on, the second unidirectional conducting device 50 will conduct positive current I2 until the current passes through zero, at which point the unidirectional switch 52 will smoothly take over conduction of negative current flow. It should be noted that if the unidirectional switch 52 is opened prior to the current I2 going negative, the presence of the second unidirectional conducting device 50 will cause operation to revert to that of a prior art converter.

As demonstrated above, by providing a mechanism for supporting negative flow of current I2, the topology of the present invention may be used to selectively regulate the amount of forward energy transferred during a converter operating cycle, irrespective of the relative values of the transformed input source 12 and the regulated output voltage, Vout. Through use of an appropriate controller 32 (which may be a part of control circuit 22), and correspondingly appropriate values of the circuit elements, many possible converter operating modes can be realized which exploit this mechanism.

For example, embodiments of circuit in accordance with the present invention might be used solely to provide reduced input operating voltage capability during transient periods of severe input source "brownout". In this implementation, the second switch circuit 28, of Figure 4, would be incorporated into the topology of Figure 2, but the unidirectional switch 52 would be maintained in its off state until the converter input voltage dropped below some predetermined level, Vmin. In such an implementation, for input voltages above Vmin (i.e. as an example, between 200 VDC and 400 VDC), the converter will operate as a prior art converter and provide all the benefits of the prior art topology. However, should voltage drop below Vmin, Forward Boost mode would be asserted and output voltage regulation would be maintained down to relatively lower values of input voltage than could otherwise be supported by the prior art topology (for example, down to 100 VDC).

In another implementation, the turns ratio of the leakage reactance transformer 14 of Fig. 2A could be set to ensure that, for the maximum specified value of input source 12, the value of transformed input source voltage 112 will always be less than the desired value of regulated output voltage Vout. The turn-on transitions of the main switch would be controlled, by control circuits 22, to occur at a constant frequency. By procedures known to one skilled in the art, a controller 32 would be implemented which would, in response to deviations of the actual converter output voltage from the desired value of regulated output, Vout, selectively regulate the time between closure of the first switch 26 and opening of the second switch 28, thereby regulating the amount of Forward Boost asserted as a means of maintaining output voltage in regulation as output power is varied. In this implementation, some controlled degree of Forward Boost is always asserted and the output voltage will be maintained in regulation, as the load is varied, while the converter is operating at a constant frequency. It should be noted that the value, L, of the second inductor 24, can be substantially reduced in a converter operating in this mode, with a corresponding reduction in both physical size and losses. While the prior art converter needed a large value of L to delay the onset of "discontinuous" mode at light loads (i.e. to maintain positive current flowing in the second inductor 24 at low operating frequencies), the high constant operating frequency in this mode reduces the time period during which the second inductor 24 must support energy transfer to the load between converter forward energy transfer cycles, and the amount of energy which needs to be stored in the second inductor 24 is reduced.

Many other controller implementations are possible which can utilize the benefits of the present invention in some advantageous way. For example, instead of providing constant frequency operation, an alternative control scheme might limit operation to a narrow band of frequencies. Or, Forward Boost might be used solely to enable a prior art converter to deliver greater values of output power, either on a transient or a continuous basis, thereby providing improvement in power density.

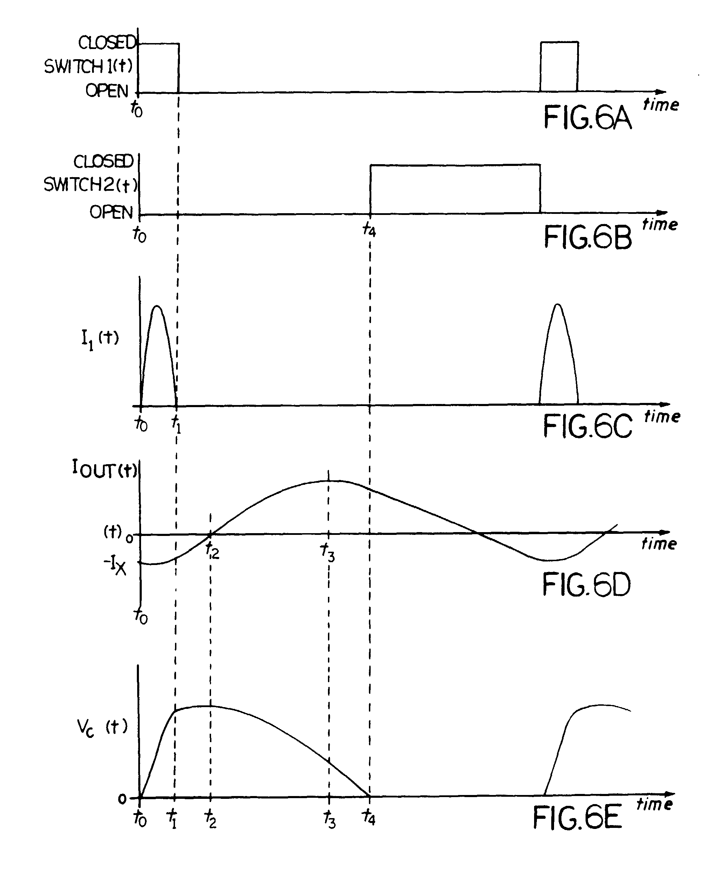

An alternate embodiment of the present invention, useful for operation in Forward Boost mode, is disclosed in Figure 5. In the figure a unidirectional switch 60 is connected directly across the secondary winding of the leakage reactance transformer, and a second unidirectional conducting device 62 is connected across the capacitor 20. In a practical converter implementation, this topology will exhibit slightly lower losses than the topology of Figure 2, since the first unidirectional conducting device 16 does not carry current during the Forward Boost phase of the cycle when the unidirectional switch 60 is carrying current.

Figures 6A - 6E show the waveforms of the converter 150 of Figure 2 operating in a mode referred to as Reverse Boost mode (at a relatively low value of Pout). In this mode of operation, current in the second inductor 24, Iout, is permitted to reverse during an operating cycle, so that at the beginning of a subsequent cycle Iout is flowing in a negative direction (i.e. from the load toward the second switching device 28). Just prior to time t0 in Figure 6, first switch 26 is open, and the second switching device 28 is closed. Negative current Iout is flowing from the load (i.e. from energy storing elements which form part of the load, such as filter capacitors) towards the second switching device 28, and is bypassed around the capacitor 20 and returned to the load via the second switching device 28. The value of Iout just prior to time t0 is -Ix, as shown in Figure 6D. The capacitor 20 voltage is at zero due to the second switching device 28 being closed. Under these conditions, if the second switching device 28 is opened at essentially the same time that the first switch 26 is closed, a Reverse Boost cycle will be initiated. In Figure 6A and 6B the cycling of the switches is shown taking place simultaneously at time t0, resulting in immediate initiation of energy transfer from the transformed input source 112 to the capacitor 20, as shown in Figure 6C. The capacitor voltage during the forward energy transfer phase will be given by Equation 4, with the initial value of current Ip equal to zero, and the initial value of current Io equal to -Ix. Thus:

$$
v_c(t) := L_p \cdot \left[ \frac{V_{eq}}{L_{2e}} + \frac{V_{out}}{L} \right] \cdot \left[ 1 - \cos\left[ 2 \cdot \frac{\pi}{T_1} \cdot t \right] \right] + I_x \cdot 2 \cdot \pi \cdot \frac{L_p}{T_1} \cdot \sin\left[ 2 \cdot \frac{\pi}{T_1} \cdot t \right] \quad (9)
$$

Using procedures known to one skilled in the art, the current flowing in the effective inductance 114 during the forward energy transfer phase can be shown to be:

$$I_1(t) = L \cdot \frac{T_1}{2 \cdot T \cdot L_s \cdot \left[\frac{L_{2e}}{}\right]} \left[\frac{V_{eq}}{L_{2e}} + \frac{V_{out}}{L}\right] \cdot \sin\left[2 \cdot \frac{T}{T_1} \cdot t\right] - I_x \cdot \frac{L}{L_s}\left[1 - \cos\left[2 \cdot \frac{T}{T_1} \cdot t\right]\right] \quad (10)$$

$$+ \frac{V_{eq} - V_{out}}{L_s} \cdot t$$

Examination of Equation 10 reveals that both the peak value of $I_1(t)$, and the time duration during which $I_1(t)$ is positive (i.e. the time period t0 to t1), are strongly dependent on the value, Ix, of negative current Iout which is flowing at time t0. This is to be expected, since, after opening the second switch 28, the negative current Ix starts to positively charge the capacitor 20. Positive voltage buildup on the capacitor 20, in response to the negative current Ix, acts to reduce the voltage across the effective inductance 114 during the energy transfer phase, thereby acting as a barrier to current flow and reducing forward energy transfer. Neglecting the term which is first-order dependent on t, Equation 10 may be rewritten as:

$$I_1(t) = I_f \cdot \sin\left[2 \cdot \frac{T}{T_1} \cdot t\right] + I_r \cdot \left[1 - \cos\left[2 \cdot \frac{T}{T_1} \cdot t\right]\right] \quad (11)$$

where:

$$I_f = L \cdot \frac{T_1}{2 \cdot T \cdot L_s} \cdot \left[\frac{V_{eq}}{L_{2e}} + \frac{V_{out}}{L}\right] \quad (12)$$

and,

$$Ir = Ix^*(L/Ls). \quad (13)$$

If is the peak value of forward current, $I_1(t)$, which would be reached if the initial current, Ix, in the second inductor 24 were zero at the start of a cycle. As shown in Equations 10 and 12, If is dependent only on the values of fixed circuit elements, and the input and output voltages, and is independent of load. Also referring back to Equation 5a, If is the same as the value of peak current which would flow in the effective inductance 114 of a prior art converter 110 if an energy transfer cycle were started with an initial value of current, Io, equal to zero in the effective inductance 114. Ir, in Equation 11, accounts for the effect of the load-dependent negative value of reverse current, Ix, in the second inductor 24, at time t0.

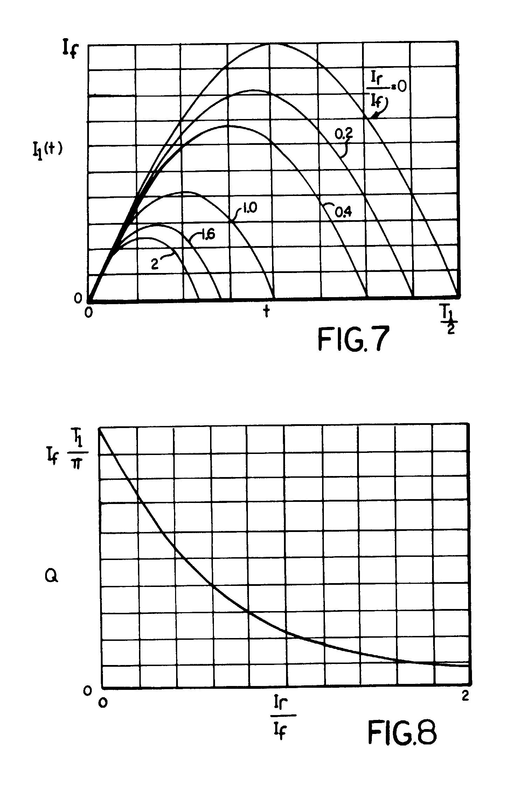

Figure 7 shows waveforms of the forward current, $I_1(t)$, of Equation 11, for different values of the ratio Ir/If. In accordance with Equations 5a and 11, the waveform for Ir/If = 0 would be the same for both a prior art converter and a converter according to the present invention if values of circuit elements were equal and an energy transfer cycle were started when the instantaneous value of output current, Iout, were zero in both. The effect of increasing the ratio Ir/If (i.e. increasing Ix) is illustrated to be a sharp decrease in both the peak value and the time duration of the forward current flow, $I_1(t)$. Mathematical integration of Equation 11, over the time period during which positive current flows, results in a value for the amount of charge transferred per cycle, Q. Figure 8 shows the effect of reverse current, Ix, on forward charge transferred per cycle for a converter according to the present invention operating in Reverse Boost mode.

Figures 7 and 8 illustrate the effect that initial reverse current flow in the second inductor 24 has upon forward energy transfer per cycle. By providing a reverse boost of energy from the load to the capacitor 20, the effect of initial reverse current flow in the second inductor 24 is a reduction in forward energy transferred during the cycle. Since Ix will become more negative as the average value of load current, Iout, drops, the amount of charge transferred per cycle will also drop. The result is that, for a given value of load, and all other circuit elements being equal in value, a converter operating in Reverse Boost mode must operate at a higher frequency than a prior art converter.

In Figure 6 at time t1, current in the effective inductance 114 of Figure 2B returns to zero and the first switch is turned off. A bidirectional energy transfer cycle now occurs during the time interval t1 to t4, with both the capacitor 20 voltage and the current in the second inductor 24, rising and falling in accordance with a characteristic time scale, T2/2, defined by the capacitance C of capacitor 20 and the inductance L of second inductor 24 (T2/2 = $\pi \sqrt{L*C}$). Between time t1 and t2, Iout remains negative and energy continues to be transferred from the load to the capacitor 20, with the capacitor 20 voltage peaking at time t2 as Iout passes through zero. Between t2 and t4 energy from the capacitor 20 is returned to the load, with Iout peaking at time t3 when the capacitor 20 voltage is equal to the load voltage, Vout. At time t4, the capacitor voltage returns to zero, and the second switch 28 is closed, preventing energy transfer from occurring between the second inductor 24 and the capacitor 20. From time t4 until the initiation of the next cycle, current Iout will ramp down linearly in accordance with Equation 8.

When operated in Reverse Boost mode according to the present invention can operate down to no load without the deleterious effects of "discontinuous" mode. By allowing for reverse current flow in the second inductor 24, while simultaneously asserting control over the amount of forward energy transferred, Reverse Boost eliminates the source of discontinuous mode while at the same time reducing the relative range of frequencies over which the converter will operate as load is decreased. Clearly, reducing the inductance value of the second inductor 24 is not only made possible by Reverse Boost, it is required to ensure that current reversal will occur at light loads.

It is informative to compare the performance of a prior art converter 10 with one of our converters 50 operating in Reverse Boost mode. Both converters are implemented using identical leakage reactance transformers 14 and capacitors 20, and both are configured to maintain a regulated output voltage, Vout, of 5 Volts. Performance comparisons are made with both converters operating with a transformed input source voltage, Veq, of 6.5 Volts. The value of the equivalent leakage inductance, referenced to the secondary (L2e in Figures 1B and 2B), is 37 nanohenries in each converter, and the capacitor 20 is a standard low-loss polypropylene device having a value of 0.44 microfarads. Both converters utilize standard Schottky power diodes for the first unidirectional conducting device 16. The second switching device 28 in our converter is implemented using the topology of Figure 4. A MOSFET transistor with an on-resistance of approximately 30 milliohms is used for switch 52, and a Schottky diode is used for the unidirectional conducting device 50. In the prior art converter 10, the value, L, of the second inductor 24 is 10 microhenries, while in our converter 50, the inductance value is reduced to 3 microhenries.

In the prior art converter, current reversal in the second inductor 24 starts to appear at an operating frequency of about 140 Kilohertz, as the average output load current is reduced to a value of about 1 Ampere. This is predictable, since, following the end of the energy transfer interval, the value of the current Iout will rise and fall in accordance with the characteristic time scale Tout/2= $\pi \sqrt{L*C}$. If the time period between the end of an energy transfer interval and the start of the next operating cycle exceeds the characteristic time scale Tout/2, then the current in the second inductor at the start of the next operating cycle will be less than its value at the end of the preceding energy transfer interval. Since at light loads the instantaneous value of current, Iout, flowing in the second inductor 24 at the end of the energy transfer interval is small, current reversal may be anticipated to occur at a converter operating period equal to the sum of the period of the energy transfer interval (in this case 0.4 microseconds) and the characteristic time scale Tout/2 (in this case, 6.6 microseconds). In this case the anticipated converter operating period at which current reversal will occur is 7 microseconds, corresponding to an operating frequency of 142.8 Kilohertz. Lacking a mechanism for bypassing the flow of the reverse current around the capacitor 20, energy is transferred to the capacitor 20 resulting in a positive voltage appearing across the capacitor at the start of the next energy transfer cycle. The presence of a positive voltage across the capacitor 20 at the start of a cycle will tend to reduce the forward energy transferred during the cycle. On a cycle by cycle basis, the energy transferred per cycle will depend upon the initial voltage on the capacitor 20 which will itself vary from cycle to cycle. The result is a variation in converter operating frequency as the controller attempts to maintain constant forward power flow. As load is reduced further, the converter operating period increases and bidirectional energy transfer between the second inductor 24 and the capacitor 20 occurs during each operating cycle. Besides resulting in a periodic operating mode, the relatively low frequency resonance characteristic of this "discontinuous mode" appears at the output in the form of increased output noise.

In our converter, the discontinuous mode is eliminated since the second switching device 28 prevents reverse energy transfer between the second inductor 24 and the capacitor 20. For the component values previously defined, operation at an average output current of 1 Ampere occurs at a stable converter operating frequency of about 161 Kilohertz. This is higher than the operating frequency of the prior art converter operating at the same load because the value of the second inductor 24 has been reduced, and current reversal in the second inductor (at a value Ix of about 1.8 Amperes) is occurring in our converter at this value of load, resulting in a reduction of forward energy transferred per cycle. No load operation occurs at a converter operating frequency of about 65 Kilohertz, at which frequency the forward power flow just compensates for the losses in the second switch 28 and the other output circuit components (about 1.8 Watts). At this operating frequency, the value of Ix is about 9 Amperes, and the period of the forward energy transfer interval has been reduced to about 0.32 microseconds.

In its simplest form, Reverse Boost would be implemented by using the circuit of Figure 4 as the second switch 28 in our converter 50 of Figure 2A. The value of second inductor 24 would be reduced relative to a prior art converter. The controller 32 would open the unidirectional switch 52 (Fig. 4) at essentially the same time that the first switch 26 was closed, and close the unidirectional switch 52 when the capacitor 20 voltage returned to zero. The variable frequency control circuit of the prior art converter would be used as the control circuit 22 for the first switch. At relatively high loads, the operating frequency would be relatively high, and the current in the second inductor 24 would always flow in a positive direction. Under these conditions, opening the unidirectional switch 52 at essentially the time that the first switch 26 is closed will have no effect on converter behavior - the second unidirectional conducting device 50 of Figure 4 will carry the positive current Iout ensuring operation as a prior art converter. As load is decreased, a value of load will be reached where current reversal will start to occur in the second inductor 24. The blocking effect of Reverse Boost on forward power flow will start to be asserted, and the rate of decrease of frequency will not occur as rapidly as the rate of decrease of load. Reverse Boost will become a self-regulating process in that the converter operating frequency will stabilize at a value such that the reverse current in the second inductor 24 at the start of a cycle (Ix of Equation 10) is sufficient to maintain the output voltage in regulation at the particular value of load. At no load, the lower limit on operating frequency in the Reverse Boost mode of operation will effectively be dependent upon the small amount of losses present in the circuit elements forming the output circuit. A value of Ix will be reached at which forward power flow will just be sufficient to compensate for output circuit losses.

As demonstrated above, for providing a mechanism for supporting negative flow of current I2, our topology may be used to selectively regulate the amount of forward energy transferred during a converter operating cycle, while simultaneously regulating reverse energy transfer from energy storing elements in the load to the capacitor 20. Elimination of the "discontinuous" operating mode at low values of load, and reduction in the range of frequencies over which the converter operates as load is reduced, are two of the resulting benefits. Through use of an appropriate controller 32 (which may be a part of control circuit 22), and correspondingly appropriate values of the circuit elements, many possible converter operating modes can be realized which exploit this mechanism. Thus, in the simplest case, discussed above, Reverse Boost might be used solely to eliminate the discontinuous mode at light loads while raising the minimum converter operating frequency. Other controller implementations might utilize the topology of the present invention to assert Reverse Boost at light loads and Forward Boost at higher values of load. This could further reduce the operating frequency range of the converter while providing other benefits, discussed above.

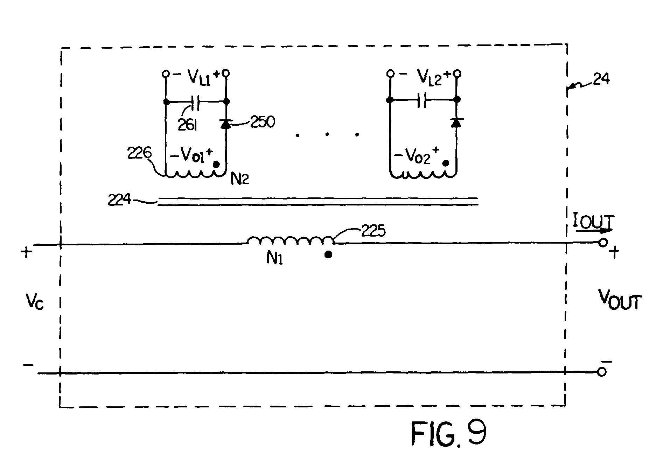

By providing a mechanism for supporting and controlling the effects of negative current flow in the second inductor 24 (i.e. for supporting reverse energy flow from the load toward the switch 28), the converter according to the present invention may be adapted to provide a multitude of independent outputs, each one of which will remain in regulation as loads on the various outputs are varied. In an alternate embodiment of the converter of the present invention 50, Figure 2A, the second inductor 24 is replaced with the circuit arrangement shown in Figure 9. In the Figure, a second inductor 224 is modified to incorporate a multitude of auxiliary windings 226. Each auxiliary winding 226 is connected in series with a unidirectional conducting device 250, and the parallel combination of a filter capacitor 261, and a load (the loads being represented as load voltages Vl1, Vl2, ...), the unidirectional conducting devices 250 being oriented to conduct when the capacitor voltage 20 goes essentially to zero and the main regulated output voltage, Vout, is impressed in reverse across the main winding 225 of the second inductor 24. The voltages generated by the auxiliary windings 226 Vo1, Vo2,..., will be related to the main output voltage, Vout, by the ratio of the number of turns on any particular auxiliary winding 226, N2, to the number of turns on the main winding 225, N1. It should be noted that maintaining the auxiliary output voltages in fixed ratio to the main output voltage depends upon maintaining the capacitor 20 voltage at zero throughout the time period during which energy is being transferred to the auxiliary loads (i.e. so that the voltage impressed in reverse across the main winding 225 of the second inductor 224 remains fixed at Vout). If the prior art converter 10 of Figure 1A were adapted in accordance with Figure 9, maintaining the various auxiliary outputs in regulation would require that a minimum load always be present on the main output. This is because the second unidirectional conducting device 18 (Figure 1A) will only maintain the capacitor voltage at zero if positive current is flowing in the second inductor 24 throughout the time period during which energy is being transferred to the auxiliary loads. Said another way, in a prior art converter, energy available for transfer to the auxiliary loads is limited to the energy which is stored in the second inductor 224 at the point in time at which the capacitor 20 voltage returns to zero. Therefore, in a prior art converter adapted per Figure 9, a minimum load must be maintained on the main output to ensure that sufficient energy is always available in the second inductor 224 to supply energy to the various auxiliary outputs under conditions of maximum load. In a converter according to the present invention, adapted per Figure 9, this minimum load condition does not exist. Because closure of the second switch 28, of Figure 2A, at the time when the capacitor 20 voltage returns to zero allows maintaining the capacitor 20 voltage at zero even after current in the main winding 225 of the second inductor 224 reverses, energy transferred to the various auxiliary loads is not limited to the magnetic energy stored in the second inductor 224 but may also be sourced from energy storage elements which form part of the main output load (i.e. filter capacitors). Thus, the converter allows a multitude of auxiliary output voltages to be maintained in a fixed ratio to the main output voltage, as loads on the various outputs are independently varied, and without requiring that a minimum load be maintained on the main converter output.

The multiple output embodiment of converter according to the present invention, as described in the preceding paragraph, is useful in many practical applications, but has characteristics which can create difficulties in others. Although the various auxiliary output voltages, Vo1, Vo2,..., (Figure 9) are in fixed ratio to the maintain output voltage, Vout, during the period of time that the unidirectional conducting devices 250 are conducting current (assuming perfect coupling between the auxiliary winding 226 and the main winding 225), the voltages delivered to the loads, VL1, VL2,..., will be reduced in value by the voltage drop across the unidirectional conducting devices 250. For example, the voltage VL1 will be equal to:

$$VL1 = Vo1 - Vd \qquad (14)$$

where,

$$Vo1 = \frac{N2}{N1} * Vout. \qquad (15)$$

In equations 14 and 15, N2 is the number of turns on the auxiliary winding 226, N1 is the number of turns on the main winding 225, and Vd is the voltage drop across the unidirectional conducting device 250. A similar equation would apply for each of the other auxiliary outputs. Several difficulties are apparent from examination of Equations 14 and 15:

since the number of turns, N1 and N2, can only have integer values, and since very large values of either N1 or N2 are impractical, the range of allowable values of Vo1 (and therefore VL1) is not continuous; the value of voltage drop in the unidirectional conducting device 250, Vd, will vary from device to device, and will also vary with changes in load and temperature. Thus, there is a limit to the degree to which an auxiliary output can be regulated. Furthermore, this limitation becomes more severe as the desired value of VL1 gets smaller since the relative contribution of the effect of variations in Vd is increased;

equation 15 assumes perfect coupling between the auxiliary winding 226 and the main winding 225. While very tight magnetic coupling between windings can be achieved in practice, tight coupling implies low values of leakage inductance. When energy transfer to the auxiliary loads via the auxiliary windings 226 commences, a discontinuity occurs in the flow of current Iout (Figure 9). Tightly coupled windings and low leakage inductance will result in relatively high rates of change of current when energy transfer begins. This puts high stresses on both the unidirectional conducting devices 250 and the capacitors 261, and can produce high frequency radiated and conducted noise. Looser coupling will result in relatively lower component stresses and current rise time, but will also result in higher leakage inductance and alteration in the value of Vo1 (i.e. Equation 15 and 14 will no longer apply).

The difficulties defined above are most significant where low voltage auxiliary outputs are desired; if relatively high power must be supplied to an auxiliary load; of if many different auxiliary output voltages, VL1, VL2,....VLn, are needed (because of the difficulty of having to simultaneously satisfy both the different relative turns ratios and compensate for the drops in the unidirectional conducting devices 250).

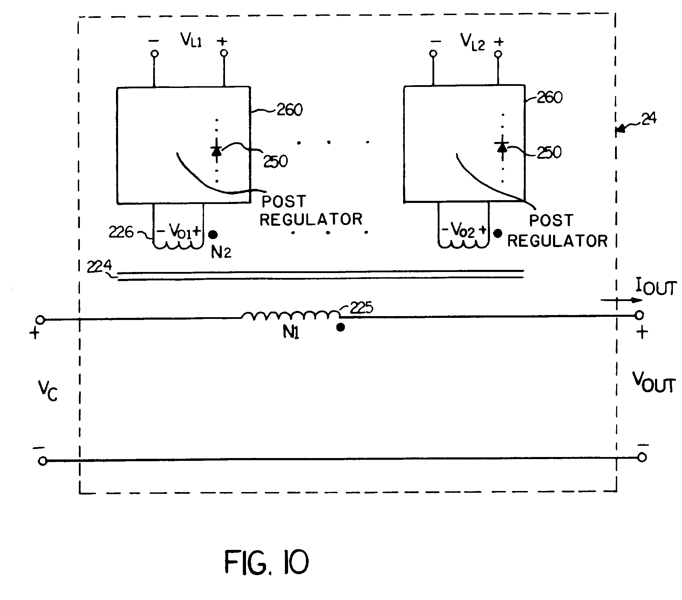

To overcome the difficulties described above, the second inductor 24 of Figure 9 can be constructed to ensure that a small amount of effective leakage inductance was present in all of the secondary windings 226 (i.e. a "loosely coupled second-inductor" would be constructed). The relative turns ratios of each of the auxiliary windings 226 on the loosely coupled second-inductor 224 would be selected to ensure that the voltage outputs of the secondary windings 226 Vo1, Vo2, ..., are greater than the values of the regulated voltages VL1, VL2,..., desired at the loads. As shown in Figure 10, each auxiliary load (represented by the load voltages VL1, VL2,...) would be connected to one of the secondary windings 226 via a post-regulator 260 which would reduce the average value of each secondary voltage Vo1, Vo2,..., to the desired value of load voltage VL1, VL2,.... Although each post-regulator 260 would incorporate a unidirectional conducting device 250 in the series path between the secondary winding 226 and the load, the specific placement of the unidirectional conducting device would depend on the specific post-regulation method chosen. A preferred embodiment of the post-regulator would be a reset magnetic amplifier (followed by a storage capacitor) which would perform the regulation function in an essentially lossless fashion. In this case, the simplest topology for the magnetic amplifier would incorporate a unidirectional conducting device 250 at the load side of the post-regulator 260, with a resettable inductor in series with, but interposed between, the secondary widing 226 and the unidirectional conducting device 250. Alternatively, for relatively low power outputs, post regulation can be achieved through use of a dissipative post-regulator 260 either with a storage capacitor at both its input and output, or with a storage capacitor at its output only. In these cases, the unidirectional conducting devices would be connected directly to the secondary windings 226 at the input side of the post-regulators 260.

In the preceding discussion a topological enhancement to a prior art zero-current-switching forward converter has been described. The topology of the present invention provides a mechanism for implementing new converter operating modes (Forward Boost and Reverse Boost) which overcome many characteristic limitations of the prior art topology. It is worthwhile to consider the relative benefits of both Forward and Reverse Boost within the contexts of contemporary component technology and current power systems architecture:

- Reverse Boost combines simplicity in implementation with a universally desirable set of benefits: elimination of the discontinuous operating mode at light loads, reduction in the range of converter operating frequency as load is varied, the ability to generate multiple outputs without a minimum load being required on any one output, and reduction in size of the second inductor.

- A very useful and desirable feature of the prior art converter topology 10, Figure 1A, is that a multitude of similar converters may be operated in parallel, in synchronized arrays, where all converters inherently, and dynamically, share an equal portion of the power delivered to the load (i.e. as in Vinciarelli, "Power Booster Switching at Zero Current", U. S. Patent No. 4,648,020 the disclosure of which is to be regarded as incorporated herein by reference). In parallel arrays composed of our converters 50, Figure 2A, accuracy in power sharing between converters will, in part, be dependent upon the relative timing of the opening of the second switch 28 in each converter in the array. This would be a particular problem when the converters in the array are configured to operate in Forward Boost mode. In such an array, accurate power sharing will depend upon all converters exhibiting the same amount of boost time (i.e. the time span from time t0 to time t1 in Figures 3A-3D). Differences in boost time between converters will produce differences in forward energy transferred during each cycle by each converter in the array. Furthermore, because the current I1 flowing in the effective inductance 114 (Figures 2B and 3C) at the time that the second switch 28 is opened is linearly dependent upon boost time, and the energy stored in the effective inductance is proportional to the square of the current, the relative energy transferred per cycle in any two converters in an array will be first-order dependent upon the square of the ratio of the boost times in the two converters. With contemporary MOSFET switches exhibiting practical switching speeds in the tens of nanoseconds, and with boost times typically ranging from several tens of nanoseconds to the low hundreds of nanoseconds, the switches themselves will limit the accuracy of current sharing in the array. Furthermore, precise equality in response of the Forward Boost controllers would be difficult to achieve, and this would further mitigate against accurate power sharing. Within the context of contemporary component technology, accurate power sharing between Forward Boost converters operating in parallel arrays would require that their respective second switching devices 28 be synchronized, which, though possible, would not be a generally desirable characteristic. Alternatively, complex circuits, trimmed to exhibit precise Forward Boost control characteristics, could be implemented - also undesirable from cost and repeatability standpoints.

Arrays composed of our converters, wherein each converter is configured to operate in Reverse Boost mode, will not suffer from the problem discussed above. At relatively high values of load, all the converters in the array will operate as prior art converters, the second switch 28 will not be a factor in forward energy transferred, and all converters will exhibit prior art power sharing characteristics. As load is decreased and Reverse Boost is asserted, the relative effect of the switching speed of the second switching device 28, in Figure 2, will be essentially insignificant. Because of the relatively slow rate of change of current Iout at time t0 (Figure 6D), a few tens of nanoseconds difference between time of closure of the first switch 26 and time of opening of the second switch 28 will not significantly affect the value of reverse current Ix. Said another way, energy transfer per cycle in different converters in an array will not be significantly affected by small differences in response times of their respective second switches 28, when the converters are configured to operate in Reverse Boost mode.

- Forward Boost allows for constant frequency operation, but requires that the turns ratio of the leakage inductance transformer 14, Figure 2A, be made sufficiently large so that at the maximum anticipated value, Vin, of the input source 12, the transformed source voltage ((N2/N1)*Vin) remains less than the desired value of regulated output voltage Vout. This ensures that Forward Boost is always active as the means of output voltage regulation. Within the context of contemporary magnetic component technology, this can create difficulties if a combination of high power output, high input voltage, and low output voltage are desired. For example, a 5 Volt output converter, which must operate with an input voltage of 350 VDC (not atypical of the rectified high line voltage from a 220 Volt line), would require a transformer turns ratio in excess of 70:1. This is not impossible, but it is difficult to implement in a small size, with low losses, at high power levels.

In the final analysis, Reverse Boost is a preferred operating mode because of its simplicity and universality of application. Within the context of contemporary component technology, Forward Boost is most useful where transient power boost may be required, where it can provide temporary operation during conditions of low input operating voltage, or for constant frequency operation at lower power levels. As component technology continues to improve, broader applicability of the Forward Boost mode can be anticipated.

It should also be noted that while the topology of our converters 50 provides a mechanism for overcoming many of the characteristic limitations of the prior art topology 10, it does so without sacrificing the prior art topology's inherently low loss characteristic. Avoidance of switching losses is retained in the present invention: the first switch 26 of Figure 2 is switched on and off at zero-current, while the second switching device 28 is operated in a "zero-voltage switching" mode (i.e. at the times at which it is cycled on and off, the voltage across it is zero and cannot change instantaneously due to the presence of the capacitor 20 across it).

## Claims

1. A zero-current switching forward converter circuit comprising: a power transformer including a primary and a secondary winding, said power transformer being constructed to have an effective secondary leakage inductance L2e; a first switching device connected for selectively coupling a power source across the primary winding of said power transformer; a first unidirectional conducting device connected in series with said secondary winding and oriented to conduct during conduction by said first switching device; a capacitor of capacitance C connected in series with said secondary winding and said first unidirectional conducting device; a controller having control means configured operatively to close said first switching device at times of zero-current and to open said first switching device substantially at the first instant in time subsequent to closure of said switching device at which current returns to zero to operatively transfer power from said voltage source via the effective leakage inductance of said transformer to charge said capacitance during an energy transfer cycle having a characteristic time scale of $\pi \sqrt{L2e^*C}$; and a second switching device connected on the secondary side of said transformer; said controller further including a second control means adapted for opening and closing said second switching device to selectively govern the amount of energy transferred during said energy transfer cycle.

2. A circuit according to Claim 1, wherein said second switching device is connected to prevent charging of said capacitor when said second switching device is closed.

3. A circuit according to Claims 1 or 2, wherein said second switching device is connected in parallel with said capacitor.

4. A circuit according to Claim 3, being adapted to supply power to a load, said circuit further comprising an inductor arranged to be operatively connected in series between said capacitor and the load to deliver current to the load.

5. A circuit according to Claim 4, wherein said second control means comprises means adapted for detecting closure of said first switching device; and means adapted for opening said second switching device at substantially the same time that said first switching device is closed.

6. A circuit according to any of Claims 3, 4 or 5, wherein said second switching device comprises a switch capable of unidirectional conduction when closed, and a second unidirectional conduction device, said switch and said unidirectional conduction device being connected in parallel and oriented to conduct in opposite directions.

7. A circuit according to Claim 6, wherein said second switching device is oriented so that said unidirectional conduction device will prevent charging of said capacitor when current flowing in said second inductor is in a direction towards the load.

8. A circuit according to Claim 1, wherein said second switching device is connected in parallel with the secondary winding of said power transformer.

9. A circuit according to Claim 8, wherein a second unidirectional conducting device is connected in parallel with said capacitor and oriented to prevent charging of said capacitor when current flowing in said second inductor is in a direction towards a load.

10. A circuit according to Claim 9, being adapted to accept a load, said circuit further comprising an inductor arranged for connection in series between said capacitance and the load to deliver current to the load.

11. A circuit according to any of Claims 4, 7, or 10, wherein said second control means comprises means for detecting closure of said first switching device, and means for opening said second switching device at a selected time thereafter.

12. A circuit according to Claims 5 or 11, wherein said second control means further comprises means adapted for detecting voltage across said capacitor, and means adapted for closing said second switching device when voltage across said capacitor is substantially zero.

13. A circuit according to Claim 3, being adapted for delivering power to two or more independent loads, said circuit further comprising a primary inductor arranged for connection in series with said capacitor and one of said independent loads; and a plurality of secondary windings magnetically coupled to said primary inductor, said secondary windings respectively having relative numbers of turns that correspond to the relative voltages to be delivered respectively to said independent loads.

14. A circuit according to Claim 13, wherein each said secondary winding is connected via a subcircuit adapted for connection to a respective said independent load, which subcircuit includes a secondary unidirectional conducting device oriented to conduct current when the voltage across said primary inductor is positive in a direction between said load and said capacitor.

15. A circuit according to Claim 14, wherein each said subcircuit includes a filter element adapted for smoothing the voltage across said independent load.

16. A circuit according to Claim 15, wherein said filter element comprises a capacitor arranged for connection in parallel with said load.

17. A circuit according to any of Claims 14, 15 or 16, wherein each said subcircuit comprises a post-regulator adapted for regulating the voltage delivered to said independent load.

18. A circuit according to Claim 17, wherein each said secondary winding is loosely magnetically coupled to said primary inductor.

19. A circuit according to Claims 17 or 18, wherein said post-regulator comprises a reset magnetic amplifier.

20. A circuit according to Claims 17 or 18, wherein said post-regulator comprises a dissipative regulator.

21. A zero-current switching forward converter circuit comprising: a voltage source; a load; a power transformer including a primary and a secondary winding, said power transformer being constructed to have an effective secondary leakage inductance L2e; a first switching device connected to selectively couple said power source across the primary winding of said power transformer; a first unidirectional conducting device connected in series with said secondary winding and oriented to conduct during conduction by said first switching device; a capacitor of capacitance C connected in series with said secondary winding and said first unidirectional conducting device; a controller having control means configured operatively to close said first switching device at times of zero-current and to open said first switching device substantially at the first instant in time subsequent to closure of said switching device at which current returns to zero to operatively transfer power from said voltage source via the effective leakage inductance of said transformer to charge said capacitance during an energy transfer cycle having a characteristic time scale of $\pi\sqrt{L2e{*}C}$; a second switching device connected on the secondary side of said transformer and in parallel with said capacitor to prevent charging of said capacitor when said second switching device is closed; and an inductor connected in series between said capacitor and the load to deliver current to the load; said controller further including a second control means adapted for opening and closing said second switching device to selectively govern the amount of energy transferred during said energy transfer cycle.

22. A method of controlling a circuit according to Claims 4, 7, 10, 14 or 17 in a reverse boost mode, said method comprising the steps of closing said first switching device at times of zero-current and opening said first switching device substantially at a first instant in time subsequent to closure of said switching device at which current returns to zero to transfer power from said voltage source via the effective leakage inductance of said transformer to charge said capacitance during an energy transfer cycle having a characteristic time scale of $\pi\sqrt{L2e{*}C}$, and opening and closing said second switching device to selectively govern the amount of energy transferred during said energy transfer cycle, said second switching device being closed when the voltage across said capacitor is substantially zero to prevent reverse current in said inductor from transferring energy to said capacitor.

23. A method of zero-current switching forward conversion in a circuit comprising: a power transformer including a primary and a secondary winding, said power transformer being constructed to have an effective secondary leakage inductance L2e; a first switching device connected for selectively coupling a power source across the primary winding of said power transformer; a first unidirectional conducting device connected in series with said secondary winding and oriented to conduct during conduction by said first switching device; a capacitor of capacitance C connected in series with said secondary winding and said first unidirectional conducting device; and a second switching device connected on the secondary side of said transformer; said method comprising the steps of closing said first switching device at times of zero-current and opening said first switching device substantially at a first instant in time subsequent to closure of said switching device at which current returns to zero to transfer power from said voltage source via the effective leakage inductance of said transformer to charge said capacitance during an energy transfer cycle having a characteristic time scale of $\pi\sqrt{L2e{*}C}$, and opening and closing said second switching device to selectively govern the amount of energy transferred during said energy transfer cycle.

24. A method according to Claim 23, wherein an inductor is connected in series between said capacitor and a load, and the method in a reverse boost mode comprises closing said second switching device when the voltage across said capacitor is substantially zero thereby to prevent reverse current in said inductor from transferring energy to said capacitor.

25. A method according to Claims 22 or 24, wherein said second switching device is opened at substantially the same time that said first switching device is closed.

26. A method according to Claim 25, wherein the frequency at which said first switch is opened and closed is varied to effect output voltage regulation.

27. A method of controlling a circuit according to any of Claims 4, 7, 8, 10, 11, or 13 to 20, to operate in a forward boost mode, said method comprising the steps of closing said first switching device at times of zero-current and opening said first switching device substantially at a first instant in time subsequent to closure of said switching device at which current returns to zero to transfer power from said voltage source via the effective leakage inductance of said transformer to charge said capacitance during an energy transfer cycle having a characteristic time scale of $\pi\sqrt{L2e{*}C}$, and opening and closing said second switching device to selectively govern the amount of energy transferred during said energy transfer cycle, said second switching device being held closed for a selected period of time after said first switching device has been closed.

28. A method according to Claim 23, wherein in a forward boost mode, said second switching device is held closed for a selected period of time after said first switching device has been closed.

29. A method according to Claims 27 or 28, wherein said second switching device is closed when voltage across said capacitor is substantially zero.

30. A method according to Claim 29, wherein the frequency at which said first switch is opened and closed is varied to effect output voltage regulation when the ratio of the value of said voltage source to the value of the output voltage of the converter is greater than the ratio of the number of turns on the primary of said power transformer to the number of turns on the secondary of said power transformer.

31. A method according to Claim 30, wherein the time period during which the second switching device remains closed is controlled so as to maintain the output voltage of the converter circuit in regulation irrespective of the relative values of said voltage source and said output voltage.

32. A method according to Claim 31, wherein said voltage source has a possibly varying voltage level, and said second switching device is opened when the level of said current flowing in said first unidirectional conduction device rises to become equal to the level of current flowing in the direction of the load in said second inductor so long as said voltage level does not fall below a predetermined value, and is otherwise controlled to stay closed for a longer time period to maintain said output voltage of the converter circuit in regulation.

33. A method according to Claim 29, wherein the ratio of the number of turns on the primary of said power transformer to the number of turns on the secondary of said power transformer is greater than the ratio of the maximum value of the voltage source to the value of the output voltage of the circuit, and the opening and closing of said first switching device is controlled to occur at a constant frequency.

**34.** A method according to Claim 33, wherein the time period during which the second switching device remains closed is controlled so as to maintain the output voltage of the converter circuit in regulation.

**35.** A method according to Claims 31 or 33, wherein the opening and closing of said first switching device is controlled to occur at frequencies within a predetermined frequency band.

**36.** A method according to Claim 27, wherein the ratio of the number of turns on the primary of said power transformer to the number of turns on the secondary of said power transformer is greater than the ratio of the maximum value of the voltage source to the value of the output voltage of the circuit.

## Patentansprüche

**1.** Nullstrom-Kommutierungsdurchfluß-Wandlerschaltung umfassend: einen Leistungstransformator, der eine primäre und eine sekundäre Wicklung einschließt, wobei der Leistungstransformator so konstruiert ist, daß er eine effektive sekundäre Streuinduktanz L2e aufweist; eine erste Schalteinrichtung, die zum selektiven Koppeln einer Leistungsquelle über der Primärwicklung des Leistungstransformators verbunden ist; eine erste Gleichstromeinrichtung, die in Reihe mit der Sekundärwicklung angeschlossen ist und ausgerichtet ist, um beim Durchlaß der ersten Schalteinrichtung zu leiten; einen Kondensator mit einer Kapazität C, der in Reihe mit der Sekundärwicklung und der Gleichstromeinrichtung angeschlossen ist; eine Steuerung, die ein Steuermittel aufweist, das betrieblich so gestaltet ist, daß die erste Schalteinrichtung zu den Zeiten des Nulldurchgangs des Stroms zu schließen und um die erste Schalteinrichtung im wesentlichen im ersten Augenblick, der dem Schließen der Schalteinrichtung nachfolgt, zu öffnen, wenn der Strom auf Null zurückkehrt, um betrieblich Leistung von der Spannungsquelle über die effektive Streuinduktanz des Transformators zu übertragen, um die Kapazität während eines Energieübertragungszyklus mit einem charakteristischen Zeitmaß von $\pi\sqrt{L2e*C}$ zu laden; und eine zweite Schalteinrichtung, die auf der Sekundärseite des Transformators angeschlossen ist: wobei die Steuerung weiterhin ein zweites Steuermittel einschließt, das zum Öffnen und Schließen der zweiten Schalteinrichtung angepaßt ist, um selektiv den Anteil der Energie, der während des Energieübertragungszyklus übertragen wird, zu bestimmen.

**2.** Schaltung nach Anspruch 1, wobei die zweite Schalteinrichtung angeschlossen ist, um ein Laden des Kondensators zu verhindern, wenn die zweite Schalteinrichtung geschlossen ist.

**3.** Schaltung nach Anspruch 1 oder 2, wobei die zweite Schalteinrichtung parallel zu dem Kondensator angeschlossen ist.

**4.** Schaltung nach Anspruch 3, die angepaßt ist, um eine Last mit Leistung zu versorgen, wobei die Schaltung weiterhin eine Induktionsspule umfaßt, die angeordnet ist, um betrieblich in Reihe zwischen dem Kondensator und der Last geschaltet zu werden, um Strom zu der Last zu liefern.

**5.** Schaltung nach Anspruch 4, wobei das zweite Steuermittel Mittel aufweist, die zum Erfassen des Schließens der ersten Schalteinrichtung angepaßt sind; und Mittel, die zum Öffnen der zweiten Schalteinrichtung zu im wesentlichen der gleichen Zeit wie die erste Schalteinrichtung geschlossen ist, angepaßt sind.

**6.** Schaltung nach irgendeinem der Ansprüche 3, 4 oder 5, wobei die zweite Schalteinrichtung einen Schalter aufweist, der, wenn er geschlossen ist, zum Gleichstromleiten geeignet ist und eine zweite Gleichstromeinrichtung, wobei der Schalter und die Gleistromeinrichtung parallel geschaltet sind und ausgerichtet sind, um in entgegengesetzter Richtung zu leiten.

**7.** Schaltung nach Anspruch 6, wobei die zweite Schalteinrichtung so ausgerichtet ist, daß die Gleichstromeinrichtung ein Laden des Kondensators verhindert, wenn der Strom, der in der zweiten Induktionsspule fließt, in Richtung auf die Last strömt.

**8.** Schaltung nach Anspruch 1, wobei die zweite Schalteinrichtung parallel zu der Sekundärwicklung des Leistungstransformators geschaltet ist.

**9.** Schaltung nach Anspruch 8, wobei eine zweite Gleichstromeinrichtung parallel zu dem Kondensator geschaltet ist und ausgerichtet ist, um ein Laden des Kondensators zu verhindern, wenn Strom, der in der zweiten Induktionsspule fließt, in Richtung auf die Last strömt.

10. Schaltung nach Anspruch 9, die angepaßt ist, um eine Last aufzunehmen, wobei die Schaltung weiterhin eine Induktionsspule umfaßt, die zum Verbinden in Reihe zwischen der Kapazität und der Last angeordnet ist, um Strom zu der Last zu liefern.

11. Schaltung nach irgendeinem der Ansprüche 4, 7 oder 10, wobei die zweite Steuerschaltung Mittel zum Erfassen des Schließens der ersten Schalteinrichtung und Mittel zum Öffnen der zweiten Schalteinrichtung zu einer ausgewählten Zeit danach umfaßt.

12. Schaltung nach Anspruch 5 oder 11, wobei die zweite Steuerschaltung Mittel aufweist, die zum Erfassen der Spannung über dem Kondensator angepaßt sind und Mittel, die zum Schließen der zweiten Schalteinrichtung angepaßt sind, wenn die Spannung über dem Kondensator im wesentlichen Null ist.

13. Schaltung nach Anspruch 3, die zur Lieferung von Leistung an zwei oder mehr unabhängige Lasten angepaßt ist, wobei die Schaltung weiterhin eine primäre Induktionsspule umfaßt, die zum Anschluß in Reihe mit dem Kondensator und einer der unabhänigen Lasten angeordnet ist; und eine Mehrzahl von Sekundärwicklungen, die magnetisch mit der Primärinduktionsspule gekoppelt sind, wobei die Sekundärwicklungen jeweils Windungen einer relativen Anzahl aufweisen, die mit den relativen Spannungen, die jeweils zu den unabhänigen Lasten zu liefern sind, korrespondieren.

14. Schaltung nach Anspruch 13, wobei jede Sekundärwicklung über eine Unterschaltung verbunden ist, die zum Verbinden mit einer entsprechenden unabhängigen Last angepaßt ist, wobei die Unterschaltung eine sekundäre Gleichstromeinrichtung einschließt, die ausgerichtet ist, um Strom zu leiten, wenn die Spannung über der Primärinduktionsspule positiv in einer Richtung zwischen der Last und dem Kondensator ist.

15. Schaltung nach Anspruch 14, wobei jede Unterschaltung ein Filterelement einschließt, das zum Glätten der Spannung über der unabhängigen Last angepaßt ist.

16. Schaltung nach Anspruch 15, wobei das Filterelement einen Kondensator umfaßt, der zum Verbinden parallel zu der Last angeordnet ist.

17. Schaltung nach irgendeinem der Ansprüche 14, 15 oder 16, wobei jede Unterschaltung einen Nachregler aufweist, der zum Regeln der Spannung, die zu den unabhängigen Lasten geliefert wird, angepaßt ist.

18. Schaltung nach Anspruch 17, wobei jede der Sekundärwicklungen magnetisch lose mit der Primärinduktionsspule gekoppelt ist.

19. Schaltung nach Anspruch 17 oder 18, wobei der Nachregler einen magnetischen Rücksetzverstärker umfaßt.

20. Schaltung nach Anspruch 17 oder 18, wobei der Nachregler einen dissipativen Regler umfaßt.

21. Nullstrom-Kommutierungsdurchfluß-Wandlerschaltung umfassend: eine Spannungsquelle; eine Last; einen Leistungstransformator, der eine Primär- und eine Sekundärwicklung einschließt, wobei der Leistungstransformator konstruiert ist, folgendes aufzuweisen: eine effektive sekundäre Streuinduktanz L2e; eine erste Schalteinrichtung, die angeschlossen ist, um selektiv die Leistungsquelle über der Primärwicklung des Leistungstransformators zu koppeln; eine erste Gleichstromeinrichtung, die in Reihe mit der Sekundärwicklung verbunden ist und ausgerichtet ist, um während des Leitens der zweiten Schalteinrichtung zu leiten; einen Kondensator einer Kapazität C, der in Reihe mit der Sekundärwicklung der ersten Gleichstromeinrichtung geschaltet ist; eine Steuerung, die Steuermittel aufweist, die gestaltet sind, um betrieblich die erste Schalteinrichtung zu den Zeiten des Nulldurchgangs des Stroms zu schließen und um die erste Schalteinrichtung im wesentlichen in dem ersten Augenblick, der dem Schließen der ersten Schalteinrichtung nachfolgt, zu öffnen, wenn der Strom auf Null zurückkehrt, um betrieblich Leistung von der Spannungsquelle über die effektive Streuinduktanz zu dem Transformator zu übertragen, um die Kapazität während eines Energieübertragungszyklus zu laden, mit einem charakteristischen Zeitmaß von $\pi\sqrt{L2e * C}$ zu laden; eine zweite Schalteinrichtung, die auf der Sekundärseite des Transformators angeschlossen ist und parallel zu dem Kondensator geschaltet ist, um ein Laden des Kondensators zu verhindern, wenn die zweite Schalteinrichtung geschlossen ist; und eine Induktionsspule, die in Reihe zwischen dem Kondensator und der Last verbunden ist, um Strom zu der Last zu liefern; wobei die Steuerung weiterhin ein zweites Steuermittel umfaßt, das zum Öffnen und Schließen der zweiten Schalteinrichtung angepaßt ist, um selektiv den Anteil der Energie, der während des Energieübertragungszyklus übertragen wird, zu bestimmen.

**22.** Verfahren zum Steuern einer Schaltung nach den Ansprüchen 4, 7, 10, 14, oder 17 in einem Umkehrverstärkungsmodus, wobei das Verfahren die Schritte umfaßt: Schließen der ersten Schalteinrichtung zu Zeiten des Nulldurchgangs des Stroms und Öffnen der ersten Schalteinrichtung im wesentlich zu einem ersten Zeitpunkt, der dem Schließen der ersten Schalteinrichtung folgt, bei dem der Strom wieder zu Null zurückkehrt, um Leistung von der Spannungsquelle über die induktive Streuinduktanz des Transformators zu leiten, um die Kapazität während eines Energieübertragungszyklus mit einem charakteristischen Zeitmaß von $\pi\sqrt{L2e * C}$ zu laden; und ein Öffnen und Schließen der zweiten Schalteinrichtung, um selektiv den Anteil der übertragenen Energie während des Energieübertragungszyklus zu bestimmen, wobei die zweite Schalteinrichtung geschlossen ist, wenn die Spannung über dem Kondensator im wesentlichen Null ist, um einen Umkehrstrom in der Induktionsspule daran zu hindern, Energie zu dem Kondensator zu übertragen.

**23.** Verfahren zum Nullstrom-Kommutierungsdurchfluß-Wandeln in einer Schaltung umfassend: einen Leistungstransformator, der eine Primär- und eine Sekundärwicklung einschließt, wobei der Leistungstransformator konstruiert ist, um folgendes aufzuweisen: eine effektive sekundäre Streuinduktanz L2e; eine erste Schalteinrichtung, die zum selektiven Koppeln einer Leistungsquelle über der Primärwicklung des Leistungstransformators angeschlossen ist; eine erste Gleichstromeinrichtung, die in Reihe mit der Sekundärwicklung verbunden ist und ausgerichtet ist, um während des Leitens der ersten Schaltungseinrichtung zu leiten; einen Kondensators der Kapazität C, der in Reihe mit der Sekundärwicklung und der ersten Gleichstromeinrichtung angeschlossen ist, und eine zweite Schakungseinrichtung, die auf der Sekundärseite des Transformators angeschlossen ist, wobei das Verfahren die Schritte umfaßt: Schließen der ersten Schalteinrichtung zu Zeiten des Nulldurchgang des Stroms und Öffnen der ersten Schalteinrichtung im wesentlichen in einem ersten Augenblick, der auf das Schließen der ersten Schalteinrichtung folgt, bei dem der Strom zu Null zurückkehrt, um Leistung von der Spannungsquelle über die effective Streuinduktanz zu dem Transformator zu übertragen, um die Kapazität während eines Energietransferzyklus mit einem charakteristischen Zeitmaß von $\pi\sqrt{L2e * C}$ zu laden; und ein Öffnen und Schließen der zweiten Schalteinrichtung um selektiv den Anteil der Energie, die während des Energieübertragungszyklus übertragen wird, zu bestimmen.

**24.** Verfahren nach Anspruch 23, wobei eine Induktionsspule in Reihe zwischen dem Kondensator und der Last angeschlossen ist, und das Verfahren in einem Umkehrverstärkungsmodus umfaßt: Schließen der zweiten Schalteinrichtung, wenn die Spannung über dem Kondensator im wesentlichen Null ist, um dadurch einen Umkehrstrom in der Induktionsspule am Übertragen der Energie zu dem Kondensator zu hindern.

**25.** Verfahren nach den Ansprüchen 22 oder 24, wobei die zweite Schalteinrichtung im wesentlichen zur gleichen Zeit geöffnet ist, wenn die erste Schalteinrichtung geschlossen ist.

**26.** Verfahren nach Anspruch 25, wobei die Frequenz, bei der der erste Schalter geöffnet und geschlossen ist, variiert, um die Ausgangsspannungsregelung zu beeinflussen.

**27.** Verfahren zum Steuern einer Schaltung nach irgendeinem der Ansprüche 4, 7, 8, 10, 11 oder 13 bis 20, um in einem Durchlaßverstärkungsmodus zu arbeiten, wobei das Verfahren die Schritte umfaßt: Schließen der ersten Schalteinrichtung zu Zeiten des Nulldurchgangs des Stroms und Öffnen der ersten Schalteinrichtung im wesentlichen in einem ersten Augenblick, der dem Schließen der ersten Schalteinrichtung folgt, bei dem der Strom zu Null zurückkehrt, um Leistung von der Spannungsquelle über die effektive Streuinduktanz zu dem Transformator zu übertragen, um die Kapazität während eines Energieübertragungszyklus mit einem charakteristischen Zeitmaß von $\pi\sqrt{L2e * C}$ zu laden; und Öffnen und Schließen der zweiten Schalteinrichtung, um selektiv den Anteil der Energie, der während des Energieübertragungszyklus übertragen wird, zu bestimmen, wobei die zweite Schalteinrichtung für eine ausgewählte Zeitspanne, nachdem die erste Schalteinrichtung geschlossen ist, geschlossen gehalten wird.

**28.** Verfahren nach Anspruch 23, wobei in einem Durchlaßverstärkungsmodus die zweite Schalteinrichtung für eine ausgewählte Zeitspanne, nachdem die erste Schaltungseinrichtung geschlossen ist, geschlossen gehalten wird.

**29.** Verfahren nach den Ansprüchen 27 oder 28, wobei die zweite Schalteinrichtung geschlossen ist, wenn die Spannung über dem Kondensator im wesentlichen Null ist.

**30.** Verfahren nach Anspruch 29, wobei die Frequenz, bei der der erste Schalter geöffnet und geschlossen wird, variiert, um die Ausgangsspannungsregelung zu beeinflussen, wenn das Verhältnis des Wertes der Spannungsquelle zu dem Wert der Ausgangsspannung des Wandlers größer ist als das Verhältnis der Anzahl der Windungen auf der Primärseite des Leistungstransistors zu der Anzahl der Windungen auf der Sekundärseite des Leistungstransistors ist.

31. Verfahren nach Anspruch 30, wobei die Zeitspanne, während der die zweite Schalteinrichtung geschlossen bleibt, so gesteuert wird, daß die Ausgangsspannung der Wandlerschaltung im Regelzustand gehalten wird, unabhängig von den Relativwerten der Spannungsquelle und der Ausgangsspannung.

32. Verfahren nach Anspruch 31, wobei die Spannungsquelle einen sich möglicherweise positiv ändernden Spannungspegel aufweist und die zweite Schalteinrichtung geöffnet ist, wenn der Pegel des Stroms, der in der ersten Gleichstromeinrichtung fließt, ansteigt, um gleich mit dem Pegel des Stroms, der in Richtung auf die Last fließt, in der zweiten Induktionsspule zu werden, solange wie der Spannungspegel nicht unter einen vorbestimmten Wert fällt und ansonsten gesteuert wird, um für eine längere Zeitspanne geschlossen zu bleiben, um die Ausgangsspannung der Wandlerschaltung im Regelzustand zu halten.

33. Verfahren nach Anspruch 29, wobei das Verhältnis der Anzahl der Windungen auf der Primärseite des Leistungstransformators zu der Anzahl der Windungen auf der Sekundärseite des Leistungstransformators größer ist als das Verhältnis des maximalen Wertes der Spannungsquelle zu dem Wert der Ausgangsspannung der Schaltung und das Öffnen und Schließen der ersten Schalteinrichtung gesteuert wird, um bei konstanter Frequenz aufzutreten.

34. Verfahren nach Anspruch 33, wobei die Zeitspanne, während der die zweite Schalteinrichtung geschlossen bleibt, gesteuert wird, um die Ausgangsspannung der Wandlerschaltung im Regelzustand zu halten.

35. Verfahren nach Anspruch 31 oder 33, wobei das Öffnen und Schließen der ersten Schalteinrichtung gesteuert wird, um bei Frequenzen innerhalb eines vorbestimmten Frequenzbandes aufzutreten.

36. Verfahren nach Anspruch 27, wobei das Verhältnis der Anzahl der Windungen auf der Primärseite des Leistungstransformators zu der Anzahl der Windungen auf der Sekundärseite des Leistungstransformators größer als das Verhältnis der Maximalspannung der Spannungsquelle zu dem Wert der Ausgangsspannung der Schaltung ist.

## Revendications

1. Circuit de conversion directe à commutation par courant nul comprenant : un transformateur de puissance comprenant un enroulement primaire et un enroulement secondaire, ledit transformateur de puissance étant réalisé de façon à présenter une inductance de fuite secondaire efficace L2e ; un premier dispositif de commutation connecté de façon à coupler, de manière sélective, une source de puissance aux bornes de l'enroulement primaire dudit transformateur de puissance ; un premier dispositif conducteur unidirectionnel connecté en série audit enroulement secondaire et orienté de façon à conduire pendant la conduction par ledit premier dispositif de commutation ; un condensateur de capacitance C connecté en série audit enroulement secondaire et audit premier dispositif conducteur unidirectionnel ; un dispositif de commande comportant des moyens de commande configurés, de manière fonctionnelle, de façon à fermer ledit premier dispositif de commutation aux moments de courant nul et à ouvrir ledit premier dispositif de commutation sensiblement au premier instant suivant la fermeture dudit dispositif de commutation auquel le courant revient à zéro pour, de manière fonctionnelle, transférer la puissance depuis la source de tension via l'inductance de fuite efficace dudit transformateur pour charger ladite capacitance pendant un cycle de transfert d'énergie présentant une échelle de temps caractéristique de $\pi\sqrt{L2e*C}$ ; et un second dispositif de commutation connecté du côté secondaire dudit transformateur ; ledit dispositif de commande comprenant, de plus, des seconds moyens de commande destinés à ouvrir et à fermer ledit second dispositif de commutation pour régler, de manière sélective, la quantité d'énergie transférée pendant ledit cycle de transfert d'énergie.

2. Circuit selon la revendication 1, dans lequel ledit second dispositif de commutation est connecté de façon à éviter la charge dudit condensateur lorsque ledit second dispositif de commutation est fermé.

3. Circuit selon la revendication 1 ou 2, dans lequel ledit second dispositif de commutation est connecté en parallèle audit condensateur.

4. Circuit selon la revendication 3, adapté pour délivrer la puissance à une charge, ledit circuit comprenant, de plus, une bobine d'inductance agencée de façon à être connectée, de manière opérationnelle, en série entre ledit condensateur et la charge pour délivrer du courant à la charge.

5. Circuit selon la revendication 4, dans lequel lesdits seconds moyens de commande comprennent des moyens destinés à détecter la fermeture dudit premier dispositif de commutation et des moyens destinés à ouvrir ledit second dispositif de commutation sensiblement en même temps que ledit premier dispositif de commutation est fermé.

6. Circuit selon l'une quelconque des revendications 3, 4 ou 5, dans lequel ledit second dispositif de commutation comprend un commutateur capable de conduction unidirectionnelle lorsqu'il est fermé et un second dispositif de conduction unidirectionnelle, ledit commutateur et ledit dispositif de conduction unidirectionnelle étant connectés en parallèle et orientés de façon à conduire dans des directions opposées.

7. Circuit selon la revendication 6, dans lequel ledit second dispositif de commutation est orienté de sorte que ledit dispositif de conduction unidirectionnelle empêche la charge dudit condensateur lorsque le courant circule dans ladite seconde bobine d'inductance dans une direction vers la charge.

8. Circuit selon la revendication 1, dans lequel ledit second dispositif de commutation est connecté en parallèle à l'enroulement secondaire dudit transformateur de puissance.

9. Circuit selon la revendication 8, dans lequel un second dispositif de conduction unidirectionnelle est connecté en parallèle audit condensateur et orienté de façon à empêcher la charge dudit condensateur lorsque le courant circule dans ladite seconde bobine d'inductance dans une direction vers une charge.

10. Circuit selon la revendication 9, adapté pour accepter une charge, ledit circuit comprenant, de plus, une bobine d'inductance agencée de manière à être connectée en série entre ladite capacitance et la charge pour délivrer du courant à la charge.

11. Circuit selon l'une quelconque des revendications 4, 7 ou 10, dans lequel lesdits seconds moyens de commande comprennent des moyens pour détecter la fermeture dudit premier dispositif de commutation et des moyens pour ouvrir ledit second dispositif de commutation à un instant sélectionné après celle-ci.

12. Circuit selon la revendication 5 ou 11, dans lequel lesdits seconds moyens de commande comprennent, de plus, des moyens destinés à détecter la tension aux bornes dudit condensateur et des moyens destinés à fermer ledit second dispositif de commutation lorsque la tension aux bornes dudit condensateur est sensiblement nulle.

13. Circuit selon la revendication 3, destiné à délivrer la puissance à deux charges indépendantes, ou plus, ledit circuit comprenant, de plus, une bobine d'inductance primaire agencée de manière à être connectée en série audit condensateur et à une desdites charges indépendantes et une pluralité d'enroulements secondaires couplés magnétiquement à ladite bobine d'inductance primaire, lesdits enroulements secondaires comportant des nombres relatifs de tours qui correspondent aux tensions relatives à délivrer, respectivement, auxdites charges indépendantes.

14. Circuit selon la revendication 13, dans lequel chacun desdits enroulements secondaires est connecté, via un sous-circuit destiné à être connecté à une charge respective parmi lesdites charges indépendantes, lequel sous-circuit comprend un dispositif de conduction unidirectionnelle secondaire orienté de façon à conduire le courant lorsque la tension aux bornes de ladite bobine d'inductance primaire est positive dans une direction entre ladite charge et ledit condensateur.

15. Circuit selon la revendication 14, dans lequel chacun desdits sous-circuits comprend un élément de filtre destiné à lisser la tension aux bornes de ladite charge indépendante.

16. Circuit selon la revendication 15, dans lequel ledit élément de filtre comprend un condensateur agencé de façon à être connecté en parallèle à ladite charge.

17. Circuit selon l'une quelconque des revendications 14, 15 ou 16, dans lequel chacun desdits sous-circuits comprend un post-régulateur destiné à réguler la tension délivrée à ladite charge indépendante.

**18.** Circuit selon la revendication 17, dans lequel chacun desdits enroulements secondaires est faiblement couplé magnétiquement à ladite bobine d'inductance primaire.

**19.** Circuit selon les revendications 17 ou 18, dans lequel ledit post-régulateur comprend un amplificateur magnétique de réinitialisation.

**20.** Circuit selon les revendications 17 ou 18, dans lequel ledit post-régulateur comprend un régulateur de dissipation.

**21.** Circuit de conversion directe à commutation par courant nul comprenant : une source de tension ; une charge ; un transformateur de puissance comprenant un enroulement primaire et un enroulement secondaire, ledit transformateur de puissance étant réalisé de façon à présenter une inductance de fuite secondaire efficace L2e ; un premier dispositif de commutation connecté de façon à coupler, de manière sélective, ladite source de puissance aux bornes de l'enroulement primaire dudit transformateur de puissance ; un premier dispositif conducteur unidirectionnel connecté en série audit enroulement secondaire et orienté de façon à conduire pendant la conduction par ledit premier dispositif de commutation ; un condensateur de capacitance C connecté en série audit enroulement secondaire et audit premier dispositif conducteur unidirectionnel ; un dispositif de commande comportant des moyens de commande configurés, de manière fonctionnelle, de façon à fermer ledit premier dispositif de commutation aux moments de courant nul et à ouvrir ledit premier dispositif de commutation sensiblement au premier instant suivant la fermeture dudit dispositif de commutation auquel le courant revient à zéro pour, de manière fonctionnelle, transférer la puissance depuis la source de tension via l'inductance de fuite efficace dudit transformateur pour charger ladite capacitance pendant un cycle de transfert d'énergie présentant une échelle de temps caractéristique de $\pi\sqrt{L2e*C}$ ; un second dispositif de commutation connecté du côté secondaire dudit transformateur et en parallèle audit condensateur pour empêcher la charge dudit condensateur lorsque ledit second dispositif de commutation est fermé ; et une bobine d'inductance connectée en série entre ledit condensateur et la charge pour délivrer du courant à la charge, ledit dispositif de commande comprenant, de plus, des seconds moyens de commande destinés à ouvrir et à fermer ledit second dispositif de commutation pour régler, de manière sélective, la quantité d'énergie transférée pendant ledit cycle de transfert d'énergie.

**22.** Procédé pour commander un circuit selon les revendications 4, 7, 10, 14 ou 17 dans un mode de suralimentation inverse, ledit procédé comprenant les étapes consistant à fermer ledit premier dispositif de commutation aux instants de courant nul et à ouvrir ledit premier dispositif de commutation sensiblement à un premier instant suivant la fermeture dudit dispositif de commutation auquel le courant retourne à zéro pour transférer la puissance depuis ladite source de tension via l'inductance de fuite efficace dudit transformateur pour charger ladite capacitance pendant un cycle de transfert d'énergie présentant une échelle de temps caractéristique de $\pi\sqrt{L2e*C}$, et à ouvrir et à fermer ledit second dispositif de commutation pour régler, de manière sélective, la quantité d'énergie transférée pendant ledit cycle de transfert d'énergie, ledit second dispositif de commutation étant fermé lorsque la tension aux bornes dudit condensateur est sensiblement nulle pour éviter qu'un courant inverse dans ladite bobine d'inductance ne transfère l'énergie vers ledit condensateur.

**23.** Procédé de conversion directe à commutation par courant nul dans un circuit comprenant : un transformateur de puissance comprenant un enroulement primaire et un enroulement secondaire, ledit transformateur de puissance étant réalisé de façon à présenter une inductance de fuite secondaire efficace L2e ; un premier dispositif de commutation connecté de façon à coupler, de manière sélective, une source de puissance aux bornes de l'enroulement primaire dudit transformateur de puissance ; un premier dispositif conducteur unidirectionnel connecté en série audit enroulement secondaire et orienté de façon à conduire pendant la conduction par ledit premier dispositif de commutation ; un condensateur de capacitance C connecté en série audit enroulement secondaire et audit premier dispositif conducteur unidirectionnel ; et un second dispositif de commutation connecté du côté secondaire dudit transformateur ; ledit procédé comprenant les étapes consistant à fermer ledit premier dispositif de commutation aux instants de courant nul et à ouvrir ledit premier dispositif de commutation sensiblement à un premier instant suivant la fermeture dudit dispositif de commutation auquel le courant revient à zéro pour, de manière fonctionnel, transférer la puissance depuis la source de tension via l'inductance de fuite efficace dudit transformateur pour charger ladite capacitance pendant un cycle de transfert d'énergie présentant une échelle de temps caractéristique de $\pi\sqrt{L2e*C}$ ; et à ouvrir et à fermer ledit second dispositif de commutation pour régler, de manière sélective, la quantité d'énergie transférée pendant ledit cycle de transfert d'énergie.

**24.** Procédé selon la revendication 23, dans lequel une bobine d'inductance est connectée en série entre ledit condensateur et une charge et dans lequel le procédé dans un mode de suralimentation inverse comprend la fermeture dudit second dispositif de commutation lorsque la tension aux bornes dudit condensateur est sensiblement nulle pour, de ce fait, éviter qu'un courant inverse dans ladite bobine d'inductance ne transfère l'énergie vers ledit condensateur.

**25.** Procédé selon les revendications 22 ou 24, dans lequel ledit second dispositif de commutation est ouvert sensiblement au même instant où ledit premier dispositif de commutation est fermé.

**26.** Procédé selon la revendication 25, dans lequel la fréquence à laquelle ledit premier commutateur est ouvert et fermé varie de façon à effectuer la régulation de la tension de sortie.

**27.** Procédé pour commander un circuit selon l'une quelconque des revendications 4, 7, 8, 10, 11 ou 13 à 20, pour fonctionner dans un mode de suralimentation direct, ledit procédé comprenant les étapes consistant à fermer ledit premier dispositif de commutation aux instants de courant nul et à ouvrir ledit premier dispositif de commutation sensiblement à un premier instant suivant la fermeture dudit dispositif de commutation auquel le courant retourne à zéro pour transférer la puissance depuis ladite source de tension via l'inductance de fuite efficace dudit transformateur pour charger ladite capacitance pendant un cycle de transfert d'énergie présentant une échelle de temps caractéristique de $\pi\sqrt{L2e^{*}C}$, et à ouvrir et à fermer ledit second dispositif de commutation pour régler, de manière sélective, la quantité d'énergie transférée pendant ledit cycle de transfert d'énergie, ledit second dispositif de commutation étant maintenu fermé pendant un intervalle de temps sélectionné après que le premier dispositif de commutation ait été fermé.

**28.** Procédé selon la revendication 23, dans lequel dans un mode de suralimentation direct, ledit second dispositif de commutation est maintenu fermé pendant un intervalle de temps sélectionné après que ledit premier dispositif de commutation ait été fermé.

**29.** Procédé selon les revendications 27 ou 28, dans lequel ledit second dispositif de commutation est fermé lorsque la tension aux bornes dudit condensateur est sensiblement nulle.

**30.** Procédé selon la revendication 29, dans lequel la fréquence à laquelle ledit premier commutateur est ouvert et fermé varie de façon à effectuer la régulation de la tension de sortie lorsque le rapport de la valeur de ladite source de tension sur la valeur de la tension de sortie du convertisseur est supérieur au rapport du nombre de tours au primaire dudit transformateur de puissance sur le nombre de tours au secondaire dudit transformateur de puissance.

**31.** Procédé selon la revendication 30, dans lequel l'intervalle de temps pendant lequel le second dispositif de commutation reste fermé est commandé de façon à maintenir la tension de sortie du circuit convertisseur en régulation indépendamment des valeurs relatives de ladite source de tension et de ladite tension de sortie.

**32.** Procédé selon la revendication 31, dans lequel ladite source de tension présente un niveau de tension susceptible de varier et dans lequel le second dispositif de commutation est ouvert lorsque le niveau dudit courant circulant dans ledit premier dispositif de conduction unidirectionnelle s'élève pour devenir égal au niveau du courant circulant dans la direction de la charge dans ladite seconde bobine d'inductance tant que ledit niveau de tension ne tombe pas au-dessous d'une valeur prédéterminée, et est, autrement, commandé pour rester fermé pendant un intervalle de temps plus long pour maintenir ladite tension de sortie du circuit convertisseur en régulation.

**33.** Procédé selon la revendication 29, dans lequel le rapport du nombre de tours au primaire dudit transformateur de puissance sur le nombre de tours au secondaire dudit transformateur de puissance est supérieur au rapport de la valeur maximale de la source de tension sur la valeur de la tension de sortie du circuit, et l'ouverture et la fermeture dudit premier dispositif de commutation est commandée de façon à se produire à une fréquence constante.

**34.** Procédé selon la revendication 33, dans lequel l'intervalle de temps pendant lequel le second dispositif de commutation reste fermé est commandé de façon à maintenir la tension de sortie du circuit convertisseur en régulation.

**35.** Procédé selon les revendications 31 ou 33, dans lequel l'ouverture et la fermeture dudit premier dispositif de commutation est commandée de façon à se produire à des fréquences comprises dans une bande de fréquences prédéterminée.

**36.** Procédé selon la revendication 27, dans lequel le rapport du nombre de tours au primaire dudit transformateur de puissance sur le nombre de tours au secondaire dudit transformateur de puissance est supérieur au rapport de la valeur maximale de la source de tension sur la valeur de la tension de sortie du circuit.

$I_{IN}$

12

$P_{IN}$ $V_{IN}$ $+$ $-$

$N_1$

26

10

FIG.1A

$I_1$ 16 24 $I_{OUT}$

$V_C$ $+$ $-$ $c$

$N_2$ 20 18 L

$V_{OUT}$ $P_{OUT}$

$I_2$

CONTROL CIRCUITS

22

14 $I_1$ $I_{OUT}$

112 16 24

$P_{IN}$ $V_{eq}$ $+$ $-$ $L_{2E}$

$V_C$ $+$ $-$ $c$ 18 L

20

$V_{OUT}$ $P_{OUT}$

26 $I_2$

110

FIG.1B

CONTROL CIRCUITS

22

EP 0 429 310 B1

FIG 2A

FIG.2B

EP 0 429 310 B1

FIG.3A

FIG.3B

FIG.3C

FIG.3D

FIG.4

FIG.5

CLOSED
SWITCH 1(t)
OPEN

$t_0$

FIG.6A    *time*

CLOSED
SWITCH2(t)
OPEN

$t_0$                    $t_4$

FIG.6B    *time*

$I_1$(t)

$t_0$  $t_1$

FIG.6C    *time*

$I_{OUT}$(t)

(t)$_0$

$-I_X$

$t_2$        $t_3$

$t_0$

FIG.6D    *time*

$V_C$ (t)

0

$t_0$  $t_1$  $t_2$        $t_3$  $t_4$

FIG.6E    *time*

FIG.7

FIG.8

$-V_{L1}+$

$-V_{L2}+$

261

250

226

$-V_{o1}+$

$-V_{o2}+$

$N_2$

224

225

$N_1$

$I_{OUT}$

24

$V_C$

$V_{OUT}$

+

−

FIG. 9

EP 0 429 310 B1

FIG. 10